(19) Europäisches Patentamt
European Patent Office
Office européen des brevets

(11) **EP 4 538 972 A1**

(12) **EUROPEAN PATENT APPLICATION**

(43) Date of publication:
**16.04.2025 Bulletin 2025/16**

(21) Application number: **24199741.0**

(22) Date of filing: **11.09.2024**

(51) International Patent Classification (IPC):
*G06T 7/20* (2017.01)    *G06T 7/70* (2017.01)

(52) Cooperative Patent Classification (CPC):
**G06T 7/20; G06T 7/70;** G06T 2207/10016;
G06T 2207/30164

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 JP 2023176280**

(71) Applicant: **Kabushiki Kaisha Toshiba**
**Tokyo 105-0023 (JP)**

(72) Inventors:
• **MASUI, Yukino**
**Minato-ku, Tokyo 105-0023 (JP)**

• **NAMIOKA, Yasuo**
**Minato-ku, Tokyo 105-0023 (JP)**
• **YOSHII, Takanori**
**Minato-ku, Tokyo 105-0023 (JP)**
• **HIRAHARA, Yoshiyuki**
**Minato-ku, Tokyo 105-0023 (JP)**
• **FUKUDA, Masamitsu**
**Minato-ku, Tokyo 105-0023 (JP)**
• **HAYASHI, Kyotaro**
**Minato-ku, Tokyo 105-0023 (JP)**
• **NAKAMURA, Hiroaki**
**Minato-ku, Tokyo 105-0023 (JP)**

(74) Representative: **Hoffmann Eitle**
**Patent- und Rechtsanwälte PartmbB**
**Arabellastraße 30**
**81925 München (DE)**

(54) **PROCESSING DEVICE, MIXED REALITY DEVICE, PROCESSING METHOD, AND STORAGE MEDIUM**

(57) According to one embodiment, a processing device (2) is configured to measure a plurality of coordinates of a hand respectively in a plurality of images, the hand being consecutively visible in the plurality of images, the hand (251, 252) turning a screw (215) by using a first tool (280). The processing device is configured to calculate a center coordinate of a rotation of the first tool by using the plurality of coordinates.

FIG. 8

EP 4 538 972 A1

**Description**

<u>FIELD</u>

Embodiments of the invention generally relate to a processing device, a mixed reality device, a processing method, and a storage medium.

<u>BACKGROUND</u>

Screws may be tightened or loosened when manufacturing an article. Technology that can support a task of turning such screws is desirable.

<u>BRIEF DESCRIPTION OF THE DRAWINGS</u>

FIG. 1 is a schematic view showing a configuration of a processing system according to a first embodiment;
FIG. 2 is a schematic view illustrating a mixed reality device according to an embodiment;
FIG. 3 is a schematic view illustrating an article that is a task object;
FIG. 4 is a schematic view showing an output example of a processing device according to the embodiment;
FIG. 5 is a schematic view showing a task;
FIG. 6 is a schematic view showing the task;
FIG. 7 is a schematic view showing the task;
FIG. 8 is a schematic view showing the task;
FIG. 9 is a figure for describing methods for calculating a center coordinate;
FIG. 10 is a figure for describing the methods for calculating the center coordinate;
FIG. 11 is a figure for describing the methods for calculating the center coordinate;
FIG. 12 is a schematic view showing an output example of the processing device according to the embodiment;
FIG. 13 is a schematic view showing an output example of the processing device according to the embodiment;
FIG. 14 is an example of a database related to a fastening location;
FIGS. 15A and 15B are drawings for describing a method for calculating the center coordinate;
FIG. 16 is a drawing for describing the method for calculating the center coordinate;
FIG. 17 is a schematic view showing a task;
FIG. 18 is a schematic view showing a task;
FIG. 19 is a schematic view showing a task;
FIG. 20 is a flowchart showing a processing method according to the embodiment;
FIG. 21 is a schematic view showing an output example of a processing device according to a first modification of the embodiment;
FIG. 22 is a schematic view illustrating a task;
FIG. 23 is a schematic view illustrating a task;
FIG. 24 is a schematic view showing an output example of the processing device according to the first modification of the embodiment;
FIG. 25 is a schematic view showing an output example of the processing device according to the first modification of the embodiment;
FIG. 26 is a schematic view showing an output example of the processing device according to the first modification of the embodiment;
FIG. 27 is a flowchart showing a processing method according to the first modification of the embodiment;
FIG. 28 is a flowchart showing a processing method according to a second modification of the embodiment;
FIG. 29 is a schematic view for describing the processing method according to the second modification of the embodiment; and
FIG. 30 is a schematic view showing a hardware configuration.

<u>DETAILED DESCRIPTION</u>

According to one embodiment, a processing device is configured to measure a plurality of coordinates of a hand respectively in a plurality of images, the hand being consecutively visible in the plurality of images, the hand turning a screw by using a first tool. The processing device is configured to calculate a center coordinate of a rotation of the first tool by using the plurality of coordinates.

Embodiments of the invention will now be described with reference to the drawings. The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated. In the drawings and the specification of the application, components similar to those described thereinabove are marked with like reference numerals, and a detailed description is omitted as appropriate.

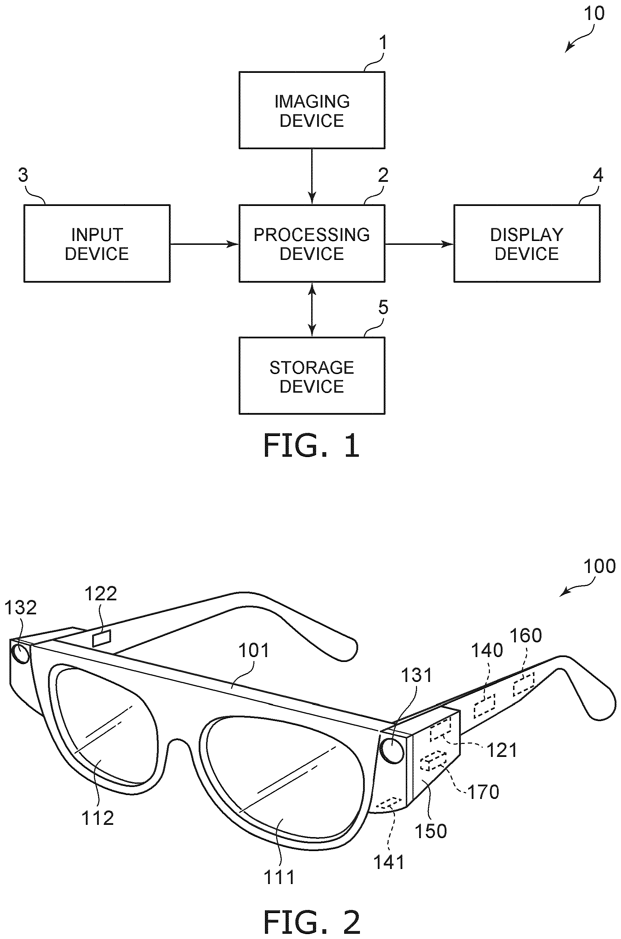

FIG. 1 is a schematic view showing a configuration of a processing system according to a first embodiment.

The embodiment of the invention is favorable for a task of turning a screw by using a tool. As shown in FIG. 1, the processing system 10 according to the embodiment includes an imaging device 1, a processing device 2, an input device 3, a display device 4, and a storage device 5.

The imaging device 1 images a task. In the task, a tool is used to fasten fasteners such as screws and the like to an article. The article is a part, unit, semifinished product, or the like for making a product. The tool is a wrench for turning screws, etc. The wrench is a ratchet wrench, a socket wrench, a box wrench, a hexagonal wrench, etc. The specific type of wrench is selected as appropriate according to the task.

When assembling the article, the worker holds the tool with a hand. The worker turns the tool to tighten the screw. As a result, the screw is fastened at a prescribed location. The imaging device 1 images a left hand or a right hand of the worker turning the tool. For example, the imaging device 1 includes a camera that acquires an RGB image and a depth image.

The processing device 2 receives consecutive images (video images) imaged by the imaging device 1. The processing device 2 recognizes the left hand or right hand in the image. Hand tracking is used to recognize the left hand or right hand. Hereinafter, at least one of the left hand or the right hand is called simply "the hand" when the left and right hands are not particularly differentiated.

The worker uses the input device 3 to input information to the processing device 2. For example, the input device 3 includes a microphone. The worker can input information to the processing device 2 by speaking toward the input device 3. As an example, a voice that corresponds to a voice command is input to the input device 3. Other than the input device 3, the worker may be able to input information to the processing device 2 with a hand gesture, etc.

The display device 4 displays information toward the worker. For example, the processing device 2 causes the display device 4 to display information to support the task. Hereinafter, the processing device causing the display device to display information also is called simply "the processing device displaying information".

The storage device 5 stores data necessary for the processing of the processing device 2, data obtained by the processing of the processing device 2, etc. For example, the storage device 5 registers data of the tool used in the task, data necessary for calculating the position of the tool as described below, etc.

When recognizing a hand based on the image acquired by the imaging device 1, the processing device 2 measures the coordinate of the recognized hand. The processing device 2 recognizes the hand and measures the coordinate each time the image is acquired. When tightening a screw, the screw is turned by a tool. The hand moves along a circumference centered on a part of the tool. Therefore, the coordinates of the hand are positioned on the circumference centered on the part of the tool. The processing device 2 calculates the center coordinate of the rotation of the tool based on the multiple coordinates that are measured.

The center coordinate corresponds to the position of the screw being tightened by the tool. Therefore, the position of the screw can be estimated by using the calculated center coordinate. When the position of the screw is estimated, the location at which the screw is being tightened can be estimated. For example, by estimating the location at which the screw is being tightened, a task record that indicates the locations at which screws have been tightened can be automatically generated. Or, when the fastening sequence of multiple locations is determined, it can be automatically determined whether or not the location at which the screw is being tightened is appropriate.

FIG. 2 is a schematic view illustrating a mixed reality device according to an embodiment.

For example, the processing system 10 shown in FIG. 1 is realized as a mixed reality (MR) device. The MR device 100 shown in FIG. 2 includes a frame 101, a lens 111, a lens 112, a projection device 121, a projection device 122, an image camera 131, a depth camera 132, a sensor 140, a microphone 141, a processing device 150, a battery 160, and a storage device 170.

The image camera 131 and the depth camera 132 are examples of the imaging device 1. The processing device 150 is an example of the processing device 2. The microphone 141 is an example of the input device 3. The projection device 121 and the projection device 122 are examples of the display device 4. The storage device 170 is an example of the storage device 5.

In the illustrated example, the MR device 100 is a binocular head mounted display. Two lenses, i.e., the lens 111 and the lens 112, are fit into the frame 101. The projection device 121 and the projection device 122 respectively project information onto the lenses 111 and 112.

The projection device 121 and the projection device 122 display a recognition result of a body of a worker, a virtual object, etc., on the lenses 111 and 112. Only one of the projection device 121 or the projection device 122 may be included;

and information may be displayed on only one of the lens 111 or the lens 112.

The lens 111 and the lens 112 are light-transmissive. The worker can visually recognize reality via the lenses 111 and 112. Also, the worker can visually recognize the information projected onto the lenses 111 and 112 by the projection devices 121 and 122. Information is displayed to overlap real space by being projected by the projection devices 121 and 122.

The image camera 131 detects visible light and obtains a two-dimensional image. The depth camera 132 irradiates infrared light and obtains a depth image based on the reflected infrared light. The sensor 140 is a six-axis detection sensor and is configured to detect angular velocities in three axes and accelerations in three axes. The microphone 141 accepts an audio input.

The processing device 150 controls components of the MR device 100. For example, the processing device 150 controls the display by the projection devices 121 and 122. The processing device 150 detects movement of the visual field based on a detection result of the sensor 140. The processing device 150 changes the display by the projection devices 121 and 122 according to the movement of the visual field. The processing device 150 also is configured to perform various processing by using data obtained from the image camera 131 and the depth camera 132, data of the storage device 170, etc.

The battery 160 supplies power necessary for the operations to the components of the MR device 100. The storage device 170 stores data necessary for the processing of the processing device 150, data obtained by the processing of the processing device 150, etc. The storage device 170 may be located outside the MR device 100, and may communicate with the processing device 150.

The MR device according to the embodiment is not limited to the illustrated example, and may be a monocular head mounted display. The MR device may be an eyeglasses-type as illustrated, or may be a helmet-type.

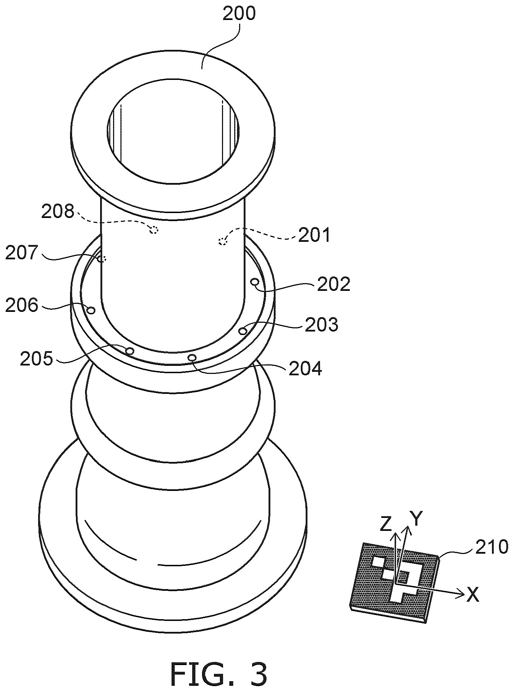

FIG. 3 is a schematic view illustrating an article that is a task object.

For example, a tightening task is performed on an article 200 shown in FIG. 3. The article 200 is a hollow tubular member and includes fastening locations 201 to 208. The worker uses a wrench to fasten screws respectively at the fastening locations 201 to 208.

A marker 210 is located proximate to the task object. In the illustrated example, the marker 210 is an AR marker. As described below, the marker 210 is provided for setting the origin of the three-dimensional coordinate system. Instead of the AR marker, a one-dimensional code (a barcode), a two-dimensional code (a QR code (registered trademark)), etc., may be used as the marker 210. Or, instead of a marker, the origin may be indicated by a hand gesture. The processing device 150 sets the three-dimensional coordinate system referenced to multiple points indicated by the hand gesture.

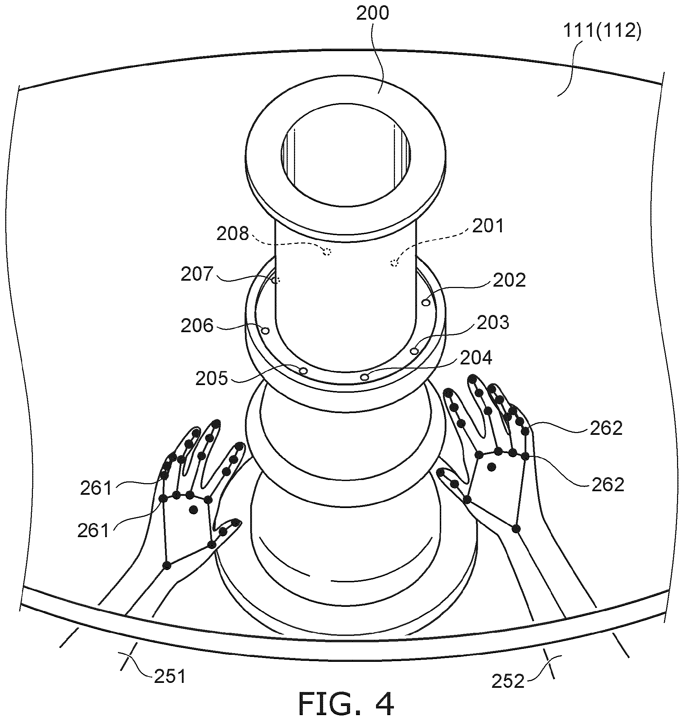

FIG. 4 is a schematic view showing an output example of the processing device according to the embodiment.

Here, an example will be described in which a screw is fastened using the MR device 100 shown in FIG. 2. When starting the tightening task, the image camera 131 and the depth camera 132 image the marker 210. The processing device 150 recognizes the marker 210 based on the captured image. The processing device 150 sets the three-dimensional coordinate system by using the position and orientation of the marker 210 as a reference.

The image camera 131 and the depth camera 132 image the article 200, a left hand 251 of the worker, and a right hand 252 of the worker. The processing device 150 recognizes the left and right hands 251 and 252 based on the captured image. The processing device 150 may cause the projection devices 121 and 122 to display the recognition result on the lenses 111 and 112. Hereinafter, the processing device using the projection device to display information on the lens also is called simply "the processing device displaying information".

For example, as shown in FIG. 4, the processing device 150 displays the recognition result of the left hand 251 and the recognition result of the right hand 252 to overlap the hands in real space. In the illustrated example, multiple virtual objects 261 and multiple virtual objects 262 are displayed as the recognition results of the left and right hands 251 and 252. The multiple objects 261 respectively indicate multiple joints of the left hand 251. The multiple objects 262 respectively indicate multiple joints of the right hand 252. Instead of joints, objects that represent the surface shape of the left hand 251 and the surface shape of the right hand 252 may be displayed.

When the left hand 251 and the right hand 252 are recognized, processing device 150 measures the coordinates of the hands. Specifically, each hand includes multiple joints such as a DIP joint, a PIP joint, an MP joint, a CM joint, etc. The coordinates of any of these joints are used as the coordinate of the hand. The centroid position of multiple joints may be used as the coordinate of the hand. Or, the center coordinate of the entire hand may be used as the coordinate of the hand.

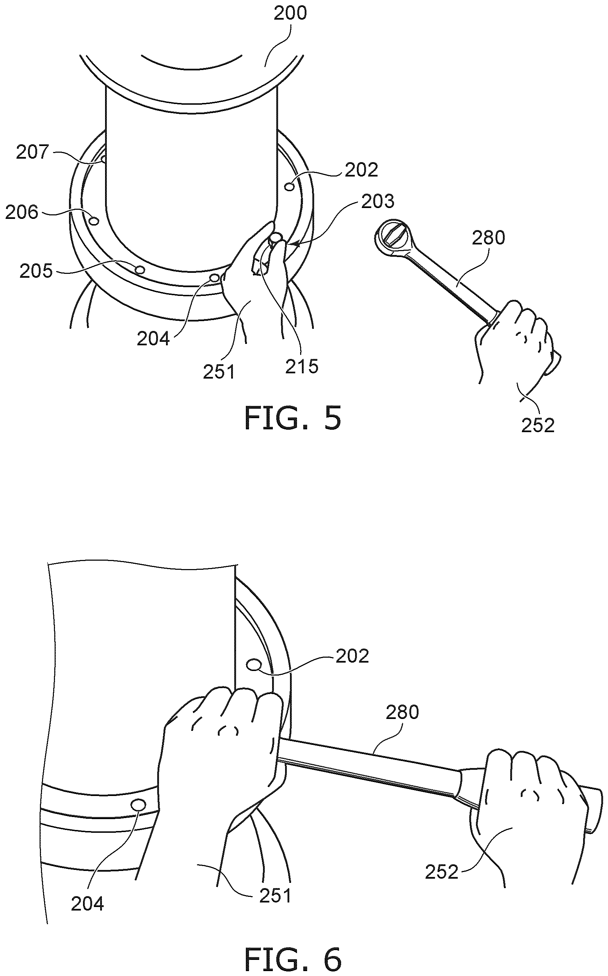

FIGS. 5 to 8 are schematic views showing a task.

For example, the worker fastens a screw at a fastening location 203. In such a case, as shown in FIG. 5, the worker places a screw 215 in the screw hole of the fastening location 203. The worker holds the grip of a wrench 280 with the right hand. The wrench 280 is an example of a first tool. The tip (the head) of the wrench 280 to which a socket is mounted is caused to engage the screw 215 by the worker.

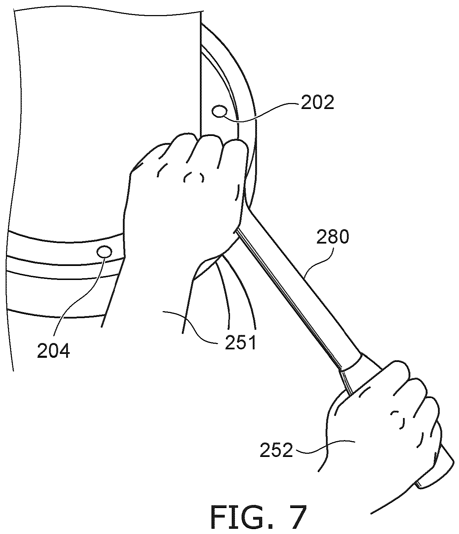

As shown in FIG. 6, the worker presses the head of the wrench 280 with the left hand 251. Then, as shown in FIG. 7, the wrench 280 is rotated with the right hand 252. The screw is turned as the wrench 280 rotates. The screw 215 is fastened by repeatedly rotating the wrench 280.

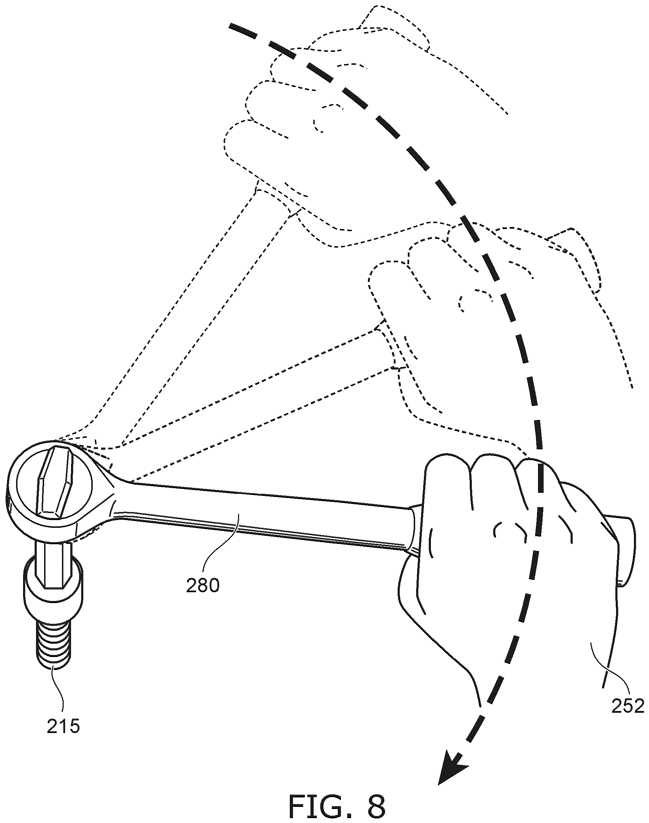

The processing device 150 repeatedly measures the coordinates of the hand while the worker turns the wrench 280. At this time, as shown in FIG. 8, the hand is positioned on a circumference centered on a part of the wrench 280. The hand is moved to trace a circular arc. The processing device 150 utilizes the movement to calculate the center coordinate of the rotation of the tool. One of the following first to third methods can be used to calculate the center coordinate.

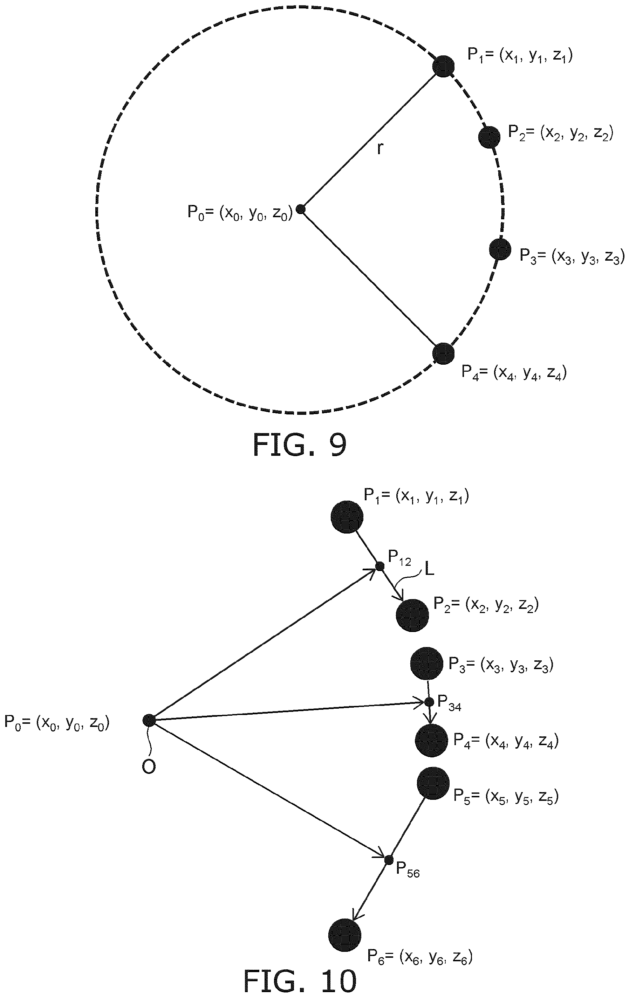

FIGS. 9 to 11 are figures for describing methods for calculating the center coordinate.

In the first method, the processing device 150 extracts four mutually-different coordinates from the multiple coordinates that are measured. The processing device 150 calculates a sphere that passes through the four coordinates. The sphere is represented by the formula of a spherical surface. Here, as shown in FIG. 9, the four coordinates are taken as $P_1(x_1, y_1, z_1)$, $P_2(x_2, y_2, z_2)$, $P_3(x_3, y_3, z_3)$, and $P_4(x_4, y_4, z_4)$. The coordinate of the center of the sphere is taken as $P_0(x_0, y_0, z_0)$. The radius of the sphere is taken as $r$. $r$ corresponds to the distance from the head of the wrench 280 to the hand (the grip), and is preregistered. In such a case, the formula of a spherical surface is represented by the following Formula (1). In Formula (1), $k$, $l$, $m$, and $n$ are constants.

$$[\text{Formula 1}]$$
$$(x - x_0)^2 + (y - y_0)^2 + (z - z_0)^2 = r^2$$

The following Formula (2) is obtained by substituting the coordinate $P_1$ in Formula (1). Formula (2) is rewritten as Formula (3).

$$[\text{Formula 2}]$$
$$(x_1 - x_0)^2 + (y_1 - y_0)^2 + (z_1 - z_0)^2 = r^2$$

$$x_0^2 + y_0^2 + z_0^2 - 2x_1x_0 - 2y_1y_0 - 2z_1z_0 + x_1^2 + y_1^2 + z_1^2 = 0 \qquad [\text{Formula 3}]$$

Similarly, the following Formulas (4) to (6) are obtained by substituting the coordinates $P_2$ to $P_4$ in Formula (1).

$$x_0^2 + y_0^2 + z_0^2 - 2x_2x_0 - 2y_2y_0 - 2z_2z_0 + x_2^2 + y_2^2 + z_2^2 = 0 \qquad [\text{Formula 4}]$$

$$x_0^2 + y_0^2 + z_0^2 - 2x_3x_0 - 2y_3y_0 - 2z_3z_0 + x_3^2 + y_3^2 + z_3^2 = 0 \qquad [\text{Formula 5}]$$

$$x_0^2 + y_0^2 + z_0^2 - 2x_4x_0 - 2y_4y_0 - 2z_4z_0 + x_4^2 + y_4^2 + z_4^2 = 0 \qquad [\text{Formula 6}]$$

The coordinate $P_0(x_0, y_0, z_0)$ is calculated by solving Formulas (3) to (6) as simultaneous equations. The center of a sphere passing through the four coordinates $P_1(x_1, y_1, z_1)$, $P_2(x_2, y_2, z_2)$, $P_3(x_3, y_3, z_3)$, and $P_4(x_4, y_4, z_4)$ is obtained thereby. The processing device 150 uses the coordinate $P_0(x_0, y_0, z_0)$ of the center of the sphere as the center coordinate of the rotation of the wrench 280.

The processing device 150 may extract multiple combinations of four coordinates. The processing device 150 calculates the coordinate of the center of the sphere for each combination. As a result, the coordinate of the center is calculated for each of the multiple spheres. Error exists in the measured coordinates of the hand. Therefore, the calculated coordinates of the multiple centers are different from each other. The processing device 150 uses the multiple coordinates to determine the coordinate to be used as the rotation center of the wrench 280. For example, the processing device 150 calculates the median value of the multiple coordinates as the center coordinate of the rotation of the wrench 280. The processing device 150 may calculate the average value or mode of the multiple coordinates as the center coordinate of the rotation of the wrench 280. The accuracy of the calculated center coordinate can be increased thereby.

In the second method, the processing device 150 extracts three coordinate pairs from the multiple coordinates that are measured. Each pair is made of two coordinates. In the example shown in FIG. 10, the pair of the coordinates $P_1$ and $P_2$, the pair of the coordinates $P_3$ and $P_4$, and the pair of the coordinates $P_5$ and $P_6$ are extracted. The six coordinates are taken as $P_1(x_1, y_1, z_1)$, $P_2(x_2, y_2, z_2)$, $P_3(x_3, y_3, z_3)$, $P_4(x_4, y_4, z_4)$, $P_5(x_5, y_5, z_5)$, and $P_6(x_6, y_6, z_6)$. The processing device 150 calculates the midpoint of the two coordinates for each pair. The coordinates of the midpoints of the pairs are taken as $P_{12}$, $P_{34}$, and $P_{56}$.

As described above, the hand moves in an arc-like shape. Accordingly, the perpendicular bisectors that pass through the midpoints of the coordinate pairs pass through the center of the circle. The center of the circle has the coordinate $P_0(x_0, y_0, z_0)$. In such a case, as shown in Formula (7), the inner product of the vector from the coordinate $P_1$ to

the coordinate $P_2$ and the vector from the coordinate $P_{12}$ to the coordinate $P_0$ is zero. Formula (7) can be rewritten as Formula (8).

[Formula 7]

$$(P_2 - P_1)\cdot(P_0 - P_{12}) = 0$$

$(x_2 - x_1)(x_0 - (x_1 + x_2)/2) + (y_2 - y_1)(y_0 - (y_2 + y_1)/2) + (z_2 - z_1)(z_0 - (z_2 + z_1)/2)$     [Formula 8]

The following Formulas (9) and (10) are obtained similarly for the other coordinate pairs.

$(x_4 - x_3)(x_0 - (x_4 + x_3)/2) + (y_4 - y_3)(y_0 - (y_4 + y_3)/2) + (z_4 - z_3)(z_0 - (z_4 + z_3)/2)$     [Formula 9]

$(x_6 - x_5)(x_0 - (x_5 + x_6)/2) + (y_6 - y_5)(y_0 - (y_6 + y_5)/2) + (z_5 - z_6)(z_0 - (z_6 + z_5)/2)$     [Formula 10]

The coordinate $P_0(x_0, y_0, z_0)$ is calculated by solving these simultaneous equations. The processing device 150 calculates the coordinate $P_0(x_0, y_0, z_0)$ as the center coordinate of the rotation of the wrench 280.

The processing device 150 may extract four or more coordinate pairs. The processing device 150 selects three coordinate pairs from the four or more coordinate pairs and calculates the coordinate $P_0$ for each combination of the selected coordinate pairs. The processing device 150 calculates the median value, average value, or mode of the multiple coordinates $P_0$ as the center coordinate of the rotation of the wrench 280. The accuracy of the calculated center coordinate can be increased thereby.

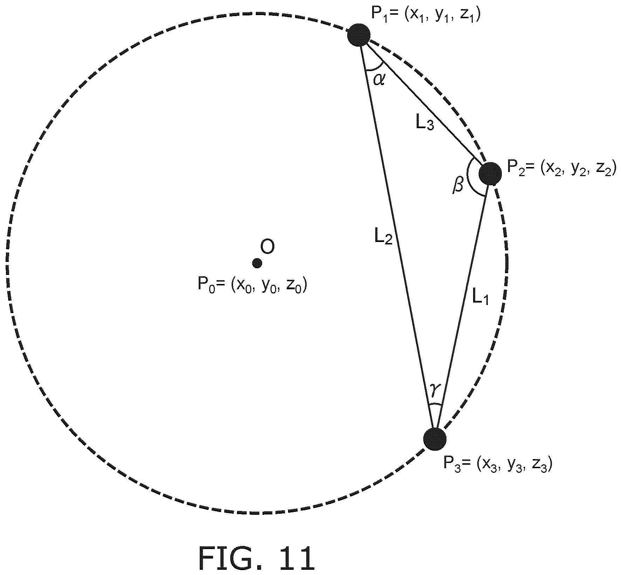

In the third method, the processing device 150 extracts three mutually-different coordinates from the multiple coordinates that are measured. The processing device 150 calculates a circumcenter O of the three coordinates. Here, as shown in FIG. 11, the three coordinates are taken as $P_1(x_1, y_1, z_1)$, $P_2(x_2, y_2, z_2)$, and $P_3(x_3, y_3, z_3)$. The coordinate of the circumcenter O is taken as $P_0(x_0, y_0, z_0)$. The length of the side opposite to the coordinate $P_1$ of a triangle obtained by connecting the coordinates $P_1$ to P3 to each other is taken as $L_1$. The length of the side opposite to the coordinate $P_2$ is taken as $L_2$. The length of the side opposite to the coordinate $P_3$ is taken as $L_3$. The angle at the coordinate $P_1$ is taken as $\alpha$. The angle at the coordinate $P_2$ is taken as $\beta$. The angle at the coordinate $P_3$ is taken as $\gamma$. In such a case, the coordinate of the circumcenter O is represented by the following Formula (11). In Formula (11), the symbols marked with arrows represent position vectors. Formula (11) can be rewritten as Formula (12). Formula (12) can be broken down into Formulas (13) to (15).

[Formula 11]

$$\overrightarrow{P_0} = \frac{L_1^2(L_2^2 + L_3^2 - L_1^2)\overrightarrow{P1} + L_2^2(L_3^2 + L_1^2 - L_2^2)\overrightarrow{P2} + L_3^2(L_1^2 + L_2^2 - L_3^2)\overrightarrow{P3}}{L_1^2(L_2^2 + L_3^2 - L_1^2) + L_2^2(L_3^2 + L_1^2 - L_2^2) + L_3^2(L_1^2 + L_2^2 - L_3^2)}$$

[Formula 12]

$$(x_0, y_0, z_0) = \frac{L_1^2(L_2^2 + L_3^2 - L_1^2)(x_1, y_1, z_1) + L_2^2(L_3^2 + L_1^2 - L_2^2)(x_2, y_2, z_2) + L_3^2(L_1^2 + L_2^2 - L_3^2)(x_3, y_3, z_3)}{L_1^2(L_2^2 + L_3^2 - L_1^2) + L_2^2(L_3^2 + L_1^2 - L_2^2) + L_3^2(L_1^2 + L_2^2 - L_3^2)}$$

[Formula 13]

$$x_0 = \frac{L_1^2(L_2^2 + L_3^2 - L_1^2)x_1 + L_2^2(L_3^2 + L_1^2 - L_2^2)x_2 + L_3^2(L_1^2 + L_2^2 - L_3^2)x_3}{L_1^2(L_2^2 + L_3^2 - L_1^2) + L_2^2(L_3^2 + L_1^2 - L_2^2) + L_3^2(L_1^2 + L_2^2 - L_3^2)}$$

[Formula 14]

$$y_0 = \frac{L_1^2(L_2^2 + L_3^2 - L_1^2)y_1 + L_2^2(L_3^2 + L_1^2 - L_2^2)y_2 + L_3^2(L_1^2 + L_2^2 - L_3^2)y_3}{L_1^2(L_2^2 + L_3^2 - L_1^2) + L_2^2(L_3^2 + L_1^2 - L_2^2) + L_3^2(L_1^2 + L_2^2 - L_3^2)}$$

[Formula 15]

$$z_0 = \frac{L_1^2(L_2^2 + L_3^2 - L_1^2)z_1 + L_2^2(L_3^2 + L_1^2 - L_2^2)z_2 + L_3^2(L_1^2 + L_2^2 - L_3^2)z_3}{L_1^2(L_2^2 + L_3^2 - L_1^2) + L_2^2(L_3^2 + L_1^2 - L_2^2) + L_3^2(L_1^2 + L_2^2 - L_3^2)}$$

$x_0$, $y_0$, and $z_0$ are calculated respectively from Formulas (13) to (15). The processing device 150 calculates the coordinate $P_0(x_0, y_0, z_0)$ of the circumcenter O as the center coordinate of the rotation of the wrench 280.

The processing device 150 may extract multiple combinations of three coordinates. The processing device 150 calculates the coordinate of the circumcenter for each combination. The processing device 150 calculates the median value, average value, or mode of the multiple coordinates as the center coordinate of the rotation of the wrench 280. The accuracy of the calculated center coordinate can be increased thereby.

Before performing one of the first to third methods, some coordinates may be selected from the multiple coordinates of the hand. One of the first to third methods is performed using the selected coordinates. For example, only the coordinates estimated to be when the hand is moving in an arc-like shape are selected; and the coordinates to be used in the first to third methods are extracted from these coordinates. By using only the coordinates when the hand is moving in the arc-like shape, the accuracy of the center coordinate can be further increased.

As an example, when a digital tool is used, the processing device 150 selects the coordinates of the hand obtained at the timing (the times) at which data is received from the digital tool. When the screw is turned with the digital tool, the digital tool detects the torque value, the rotation angle, etc. The processing device 150 receives the detected values detected by the digital tool. The reception of the detected value indicates that the hand is moving in an arc-like shape. Therefore, the coordinates of the hand obtained at the timing (the times) at which the detected values are received are selected and used to calculate the center coordinate, and so the center coordinate can be calculated with higher accuracy.

Even when the coordinates are not selected, the center coordinate can be calculated by calculating multiple candidates of the center coordinate in one of the first to third methods. For example, the processing device 150 excludes outliers from the multiple candidates and calculates the median value, average value, or mode of the remaining candidates as the center coordinate.

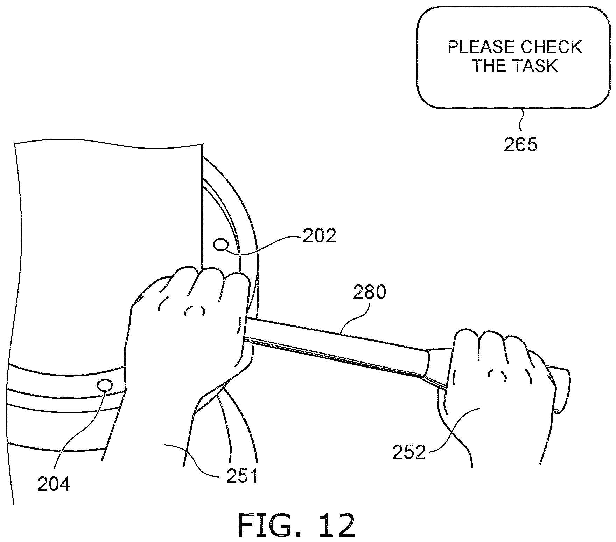

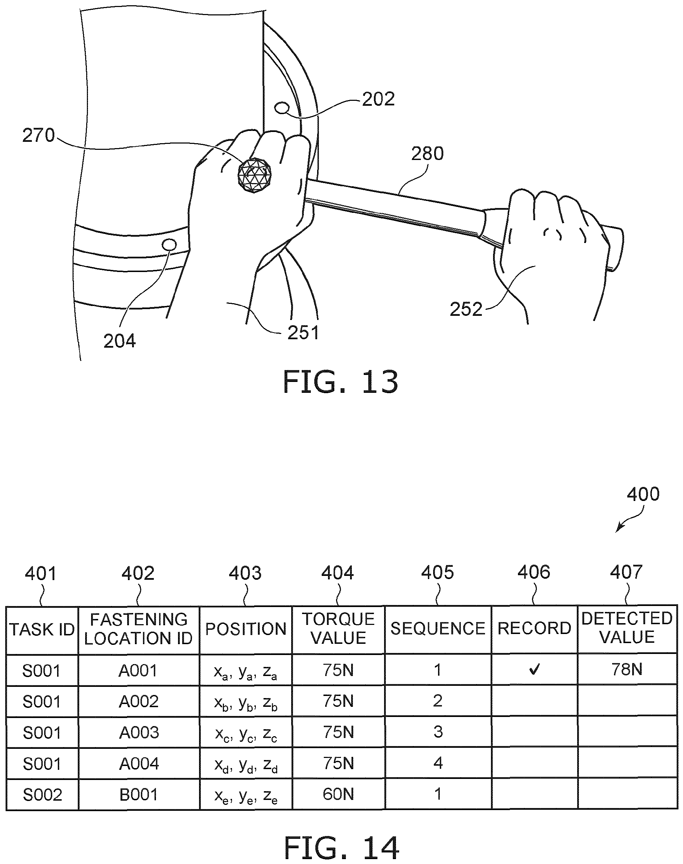

FIGS. 12 and 13 are schematic views showing an output example of the processing device according to the embodiment.

The center coordinate of the rotation of the wrench 280 can be considered to be the position of the screw being tightened by the wrench 280. The screw is fastened at a prescribed location of the article, and so the location at which the screw is being tightened can be estimated by estimating the position of the screw. For example, when the positions of the fastening locations are preregistered, it can be estimated that the screw is being tightened at the fastening location most proximate to the center coordinate. The processing device 150 may record that the screw has been tightened at the location at which it is estimated that the screw is being tightened. The task record can be automatically generated thereby.

Or, when the fastening sequence for multiple locations is determined, the processing device 150 can determine whether or not the location at which the screw is being tightened is appropriate. For example, the processing device 150 acquires the coordinate of the location at which the screw is to be fastened. The processing device 150 calculates the center coordinate of the rotation of the wrench 280 based on the coordinates of the hand measured while the worker is tightening the screw. The processing device 150 calculates the distance between the center coordinate and the coordinate of the location at which the screw is to be fastened.

When the calculated distance is greater than a preset threshold, the processing device 150 determines that the screw is being tightened at an erroneous location. In such a case, the processing device 150 outputs an alert 265 as shown in FIG. 12. In the illustrated example, the message to the worker is displayed as the alert. Instead of a display, the processing device 150 may cause a prescribed output device to output a voice, a sound, a vibration, light, etc., as the alert.

The processing device 150 may output a message, a voice, a sound, a vibration, light, etc., when the calculated distance is not more than the threshold. These outputs are different from the alert. In other words, the processing device 150 may output a notification toward the worker to indicate that the task is appropriate.

When the task is appropriate, the mode may be switchable between a mode of outputting a notification and a mode of not outputting a notification. The processing device 150 accepts the mode selection. The worker can select the mode with a voice command or a hand gesture. Because the worker can adjust the amount of notifications by selecting the mode, the ease of use of the MR device 100 is improved.

As shown in FIG. 13, the processing device 150 may display the calculated center coordinate. In the example shown in FIG. 13, the center coordinate is illustrated by a virtual object 270. By displaying the object 270, the worker can easily ascertain the position that is calculated as the center coordinate. For example, there is also a possibility that the calculation of the center coordinate may be erroneous. By displaying the object 270 when the alert is output, the worker easily ascertains the cause of the alert. In other words, the worker can easily ascertain whether the alert is output due to an erroneous task, or the alert is output because the center coordinate is erroneous. As a result, the convenience of the processing system 10 or the MR device 100 can be improved.

As described above, the processing device 150 receives detected values from the wrench 280 when the wrench 280 is a digital tool. In such a case, the processing device 150 may associate a detected value such as a torque value or the like with data of the location at which it is estimated that the screw is being tightened. When the torque necessary for fastening the screw is preregistered, the processing device 150 may determine whether or not the necessary torque is detected. The processing device 150 registers the determination result in the task record in addition to the torque value.

FIG. 14 is an example of a database related to the fastening location.

For example, as shown in FIG. 14, data related to the fastening location is preregistered. A database 400 shown in FIG. 14 includes a task ID 401, a fastening location ID 402, a position 403, a torque value 404, a sequence 405, a record 406, and a detected value 407. The task ID 401 includes the ID of the task in which the tightening task of the screw is performed. The fastening location ID 402 includes the ID of the location at which the screw is fastened in each task. The position 403 indicates the coordinate of the fastening location designated by the fastening location ID. The coordinate in the three-dimensional coordinate system in the tightening task is registered in the position 403. In the example shown in FIGS. 3 to 7, the coordinate of the hand is measured in a three-dimensional coordinate system having the marker 210 as the origin. The positions 403 of the locations are represented using coordinates in the same three-dimensional coordinate system.

The torque value 404 indicates the torque value necessary for the screw-tightening at each location. The sequence 405 indicates the sequence of the fastening at multiple fastening locations in one task. When the sequence is undetermined, the column of the sequence 405 is omissible. The record 406 indicates whether or not the fastening of the screw is completed at each location. When fastening the screw, data that indicates the completion is registered in the record 406. The detected value 407 indicates the value detected by the digital tool. For example, when the sequence of the fastening is appropriate and the necessary torque value is detected for the location at which it is estimated that the screw is being tightened, the processing device 150 registers, in the record 406, data indicating that the fastening of the screw is completed. Simultaneously, the processing device 150 registers the torque value at that time in the detected value 407. As a result, the record and detected value of the task are automatically associated with the data of each fastening location.

To more accurately estimate the position of the screw, the processing device 150 may use the length of the tool interposed between the wrench 280 and the screw to estimate the position at which the screw is present. In the example shown in FIGS. 5 to 7, a socket (not illustrated) engages the wrench 280. In other words, the center coordinate of the rotation of the wrench 280 and the position of the screw are separated by the length of the socket. When the length of the socket is preregistered, the processing device 150 can use the center coordinate and the length of the socket to more accurately estimate the position of the screw.

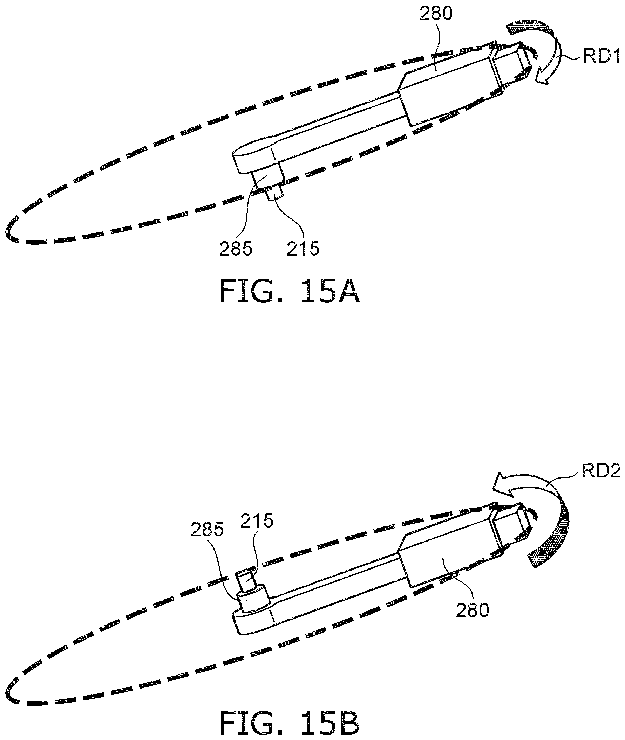

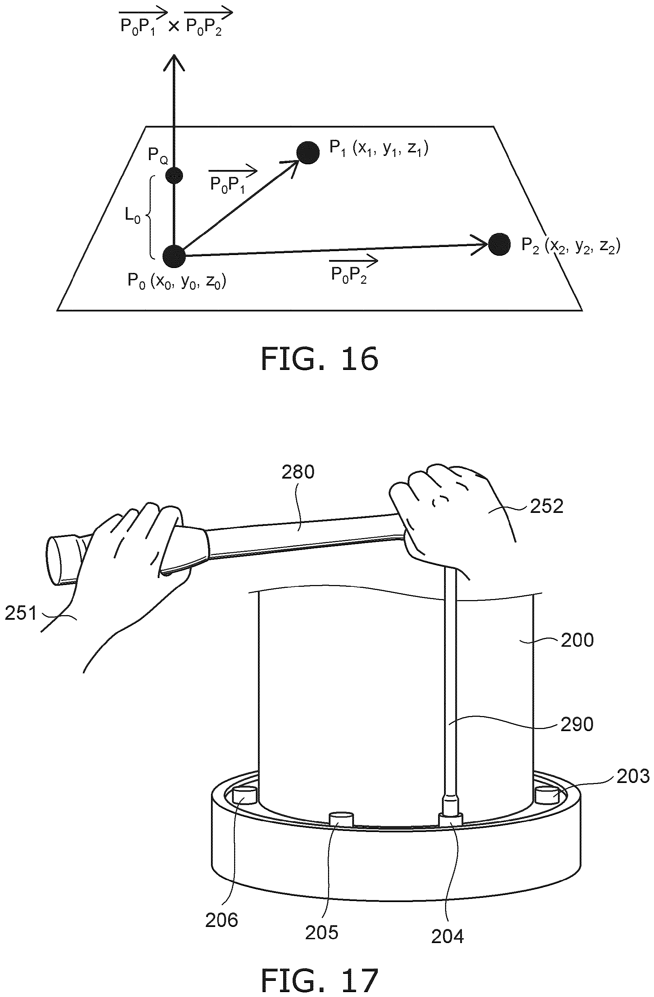

FIGS. 15A, 15B, and 16 are drawings for describing a method for calculating the center coordinate.

When using the length of the socket to estimate the position of the screw, it is necessary to determine the side at which the screw is positioned with respect to the plane in which the wrench 280 is rotating. In the example shown in FIG. 15A, the wrench 280 rotates in a rotation direction RD1. The screw 215 and a socket 285 are positioned at the lower side. In the example shown in FIG. 15B, the wrench 280 rotates in a rotation direction RD2. The rotation direction RD2 is the opposite of the rotation direction RD1. The screw 215 and the socket 285 are positioned at the upper side of a plane parallel to the rotation direction RD2.

To determine the side at which the screw 215 is positioned, the processing device 150 uses the center coordinate, two coordinates of the hand, time-series information of the two coordinates, and tighten/loosen information of the screw. For example, as shown in FIG. 16, the two coordinates are taken as $P_1(x_1, y_1, z_1)$ and $P_2(x_2, y_2, z_2)$. The center coordinate is taken as $P_0(x_0, y_0, z_0)$. The time at which the hand is at the coordinate $P_1$ and the time at which the hand is at the coordinate $P_2$ are known. In other words, the processing device 150 stores time-series information of the coordinates $P_1$ and $P_2$. In the example, the time at which the hand was positioned at the coordinate $P_1$ is before the time at which the hand was positioned at the coordinate $P_2$.

The tighten/loosen information indicates whether the screw is being tightened or loosened. When the wrench 280 is a digital tool, the wrench 280 generates the tighten/loosen information by determining whether the screw is being tightened or loosened based on the detected torque value. The processing device 150 may generate the tighten/loosen information by determining whether the screw is being tightened or loosened based on the time-series data of the torque value received from the wrench 280.

A plane that passes through the coordinates $P_0$ to $P_2$ is represented by the following Formula (16). In Formula (16), *k, l*, m, and *n* are constants.

[Formula 16]

$$kx + ly + mz + n = 0$$

The following Formulas (17) to (19) are obtained by substituting the coordinates of $P_0$ to $P_2$ in Formula (16). The constants k, $l$, m, and $n$ are calculated from Formulas (17) to (19).

[Formula 17]

$$kx_0 + ly_0 + mz_0 + n = 0$$

[Formula 18]

$$kx_1 + ly_1 + mz_1 + n = 0$$

[Formula 19]

$$kx_2 + ly_2 + mz_2 + n = 0$$

Here, the processing device 150 calculates a vector from the center coordinate $P_0$ to the coordinate $P_1$ at the previous time. Also, the processing device 150 calculates a vector from the center coordinate $P_0$ to the coordinate $P_2$ at the subsequent time. The screw 215 is at a position $P_Q$ that is separated from the center coordinate $P_0$ by a length $L_0$ of the socket on the normal vector $P_0P_1 \times P_0P_2$. When the screw is being tightened and the time of the coordinate $P_1$ is before the time of the coordinate $P_2$, the processing device 150 calculates the normal vector $P_0P_1 \times P_0P_2$ of the vector $P_0P_1$ and the vector $P_0P_2$.

The length from the coordinate $P_0$ to the coordinate $P_Q$ at which the wrench and the socket act on the screw is represented by the following Formula (20). In the following formulas, the symbols marked with arrows indicate that the value of the symbol is a vector.

[Formula 20]

$$|\overrightarrow{P_0P_Q}| = \sqrt{\{(k-x_0)^2 + (l-y_0)^2 + (m-z_0)^2\}} = L_0$$

On the other hand, the vector from the coordinate $P_0$ to the coordinate $P_Q$ also may be represented by the following Formula (21) by using the vector $P_0P_1$ and the vector $P_0P_2$. In Formula (21), t is a constant.

[Formula 21]

$$\overrightarrow{P_0P_Q} = (k-x_0, l-y_0, m-z_0) = t(k,l,m)$$

The following Formula (22) is obtained by substituting Formula (21) in Formula (20). The length $L_0$ in Formula (22) is preregistered. $t$ is calculated by solving Formula (22).

[Formula 22]

$$\sqrt{\{(\{(y_1-y_0)(z_2-z_0)-(y_2-y_0)(z_2-z_0)\}^2 *t^2}$$
$$+\{(z_1-z_0)(x_2-x_0)-(z_2-z_0)(x_1-x_0)\}*t^2$$
$$+\{(x_1-x_0)(y_2-y_0)-(x_2-x_0)(y_1-y_0)\}*t^2\} = L_0$$

When t is calculated, the coordinate $P_Q$ is calculated using the coordinate $P_0$ and the constants k, $l$, $m$, $n$, and $t$. In other words, the position of the screw is obtained.

FIGS. 17 to 19 are schematic views showing tasks.

As shown in FIG. 17, there are cases where the screw is fastened via an extension bar 290. The extension bar 290 is mounted between the wrench 280 and the screw. In such a case as well, similarly to the method described above, the position of the screw can be estimated using the length of the extension bar 290.

In other words, the screw is at a position separated from the center coordinate $P_0$ by the sum of the length of the socket 285 and the length of the extension bar 290 on the normal vector $P_0P_1 \times P_0P_2$. The position $P_Q$ of the screw is estimated using the center coordinate $P_0$, the length of the socket 285, and the length of the extension bar 290. The position of the screw can be estimated with higher accuracy by considering the length of another tool interposed between the screw and the wrench 280.

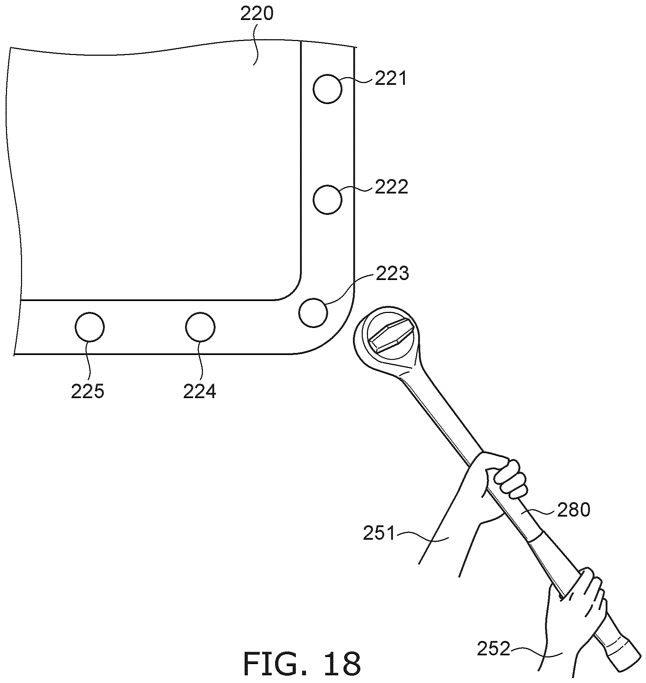

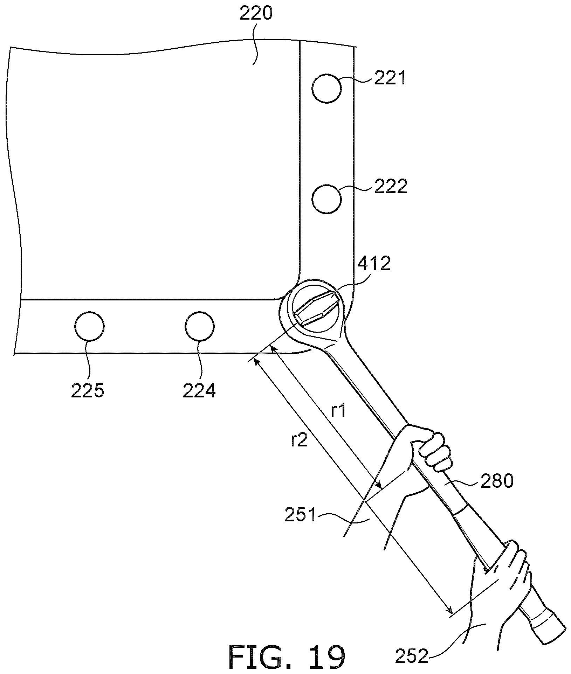

As shown in FIG. 18, there are cases where the tool is gripped with two hands. In the example shown in FIG. 18, an article 220 is positioned at a high location. The worker holds the wrench 280 with two hands to stabilize the wrench 280. As shown in FIG. 19, the wrench 280 is turned with two hands in this state to fasten screws respectively at fastening locations 221 to 225.

In such a case, the left hand 251 moves in an arc-like shape at a distance r1 from the head of the wrench 280. The right hand 252 moves in an arc-like shape at a distance r2 from the head of the wrench 280. The processing device 150 can calculate the center coordinate of the rotation of the tool based on both the multiple coordinates of the left hand 251 and the multiple coordinates of the right hand 252. Any of the first to third methods described above can be used to calculate the center coordinate.

For example, the processing device 150 calculates a first center coordinate based on the multiple coordinates of the left hand 251. The processing device 150 calculates a second center coordinate based on the multiple coordinates of the right hand 252. The processing device 150 uses an intermediate value between the first center coordinate and the second center coordinate as the final center coordinate.

The processing device 150 may extract multiple combinations from multiple coordinates of the left hand 251 to calculate multiple first center coordinates. Similarly, the processing device 150 may extract multiple combinations from multiple coordinates of the right hand 252 to calculate the multiple second center coordinates. The processing device 150 uses an intermediate value, average value, or mode of the multiple first center coordinates and the multiple second center coordinates as the final center coordinate.

The processing device 150 may weight the first and second center coordinates. The center coordinate can be calculated more accurately as the hand moves away from the rotation center of the tool. In the example shown in FIG. 19, the distance r2 between the right hand 252 and the head of the wrench 280 is greater than the distance r1 between the left hand 251 and the head of the wrench 280. It is therefore favorable to weight the second center coordinate calculated from the movement of the right hand 252 more than the first center coordinate calculated from the movement of the left hand 251.

As an example, the processing device 150 uses a weighted average of the first center coordinate and the second center coordinate as the final center coordinate. The ratio of the distance r1 to the distance r2 can be used as the ratio of the weight for the first center coordinate to the weight for the second center.

When multiple first center coordinates and multiple second center coordinates are calculated, a part of the multiple first center coordinates and a part of the multiple second center coordinates may be extracted. At this time, the second center coordinate is weighted more than the first center coordinate setting the number of the second center coordinates extracted to be greater than the number of the first center coordinates extracted. The ratio of the distance r1 to the distance r2 can be used as the ratio of the number of the second center coordinates extracted to the number of the first center coordinates extracted. The processing device 150 uses an intermediate value, average value, or mode of the extracted first center coordinate and the extracted second center coordinate as the final center coordinate.

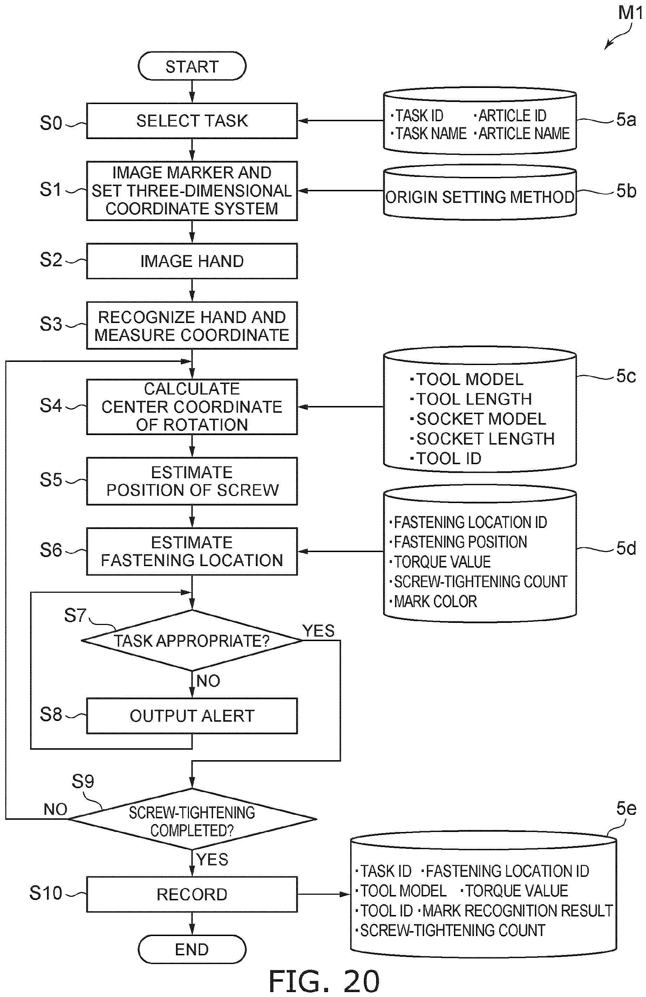

FIG. 20 is a flowchart showing a processing method according to the embodiment.

Before performing the processing method M1 shown in FIG. 20, a task master data 5a, an origin master data 5b, a tool master data 5c, and a fastening location master data 5d are prepared. Each set of master data is stored in the storage device 5.

First, the task to be performed is selected (step S0). The task is designated by the task ID, the task name, the ID of the article on which the task is performed, the name of the article, etc. The processing device 2 accepts the selection of the task. For example, the task to be performed is selected by the worker. The task to be performed may be selected by a higher-level system; and the processing device 2 may accept the selection. The processing device 2 may determine the task to be performed based on data obtained from the imaging device 1 or another sensor. The processing device 2 selects the task based on the determination result.

Then, the imaging device 1 images the marker 210. The processing device 2 sets a three-dimensional coordinate system by using the position and orientation of the marker 210 as a reference (step S1). At this time, the processing device 2 refers to the origin master data 5b. The origin master data 5b stores the setting method of the origin for each task. The processing device 2 acquires the setting method of the origin for the selected task and sets the origin according to the setting method.

Subsequently, the task is started. The imaging device 1 acquires an image by imaging the hand (step S2). The processing device 2 recognizes the hand based on the image and measures the coordinate of the hand (step S3). The acquisition of the image, the recognition of the hand, and the measurement of the coordinate are continuously repeated during the task.

The processing device 2 uses multiple coordinates obtained by repeating step S3 to calculate the center coordinate of the rotation of the tool by using one of the first to third methods (step S4). At this time, the processing device 2 refers to the tool master data 5c.

The tool master data 5c stores the ID of the tool to be used, the model of the tool, the length of the tool, the model of the socket, the length of the socket, etc., for each task. The model of the tool indicates the classification of the tool by structure, exterior shape, performance, etc. The length of the tool is the length from the rotation center to the grip when the tool is used for screw-tightening. The model of the socket indicates the classification of the socket by structure or exterior shape. The length of the socket is the length of the socket in the direction connecting the tool and the screw when tightening the screw. The processing device 2 acquires, from the tool master data 5c, the data of the tool to be used in the task selected in step S0. When an extension bar is used as shown in FIG. 17, the model, the length, etc., of the extension bar also are stored in the tool master data 5c. The processing device 2 also acquires the data related to the extension bar from the tool master data 5c.

The processing device 2 estimates the position of the screw based on the center coordinate calculated in step S4 (step S5). The processing device 2 estimates the location at which the screw is being tightened based on the estimated position of the screw (step S6). At this time, the processing device 2 refers to the fastening location master data 5d.

The fastening location master data 5d stores the ID of the fastening location, the position of the fastening location, the necessary torque value, and the screw-tightening count for each fastening location. The fastening position is the position at which the fastening location is present, and is designated by the coordinate in the three-dimensional coordinate system set in step S1. The screw-tightening count is the number of times that the screw must be tightened for each fastening location. When the screw is to be marked after fastening, the color of the mark also is registered.

The processing device 2 determines whether or not the task is appropriate based on the estimation result (step S7). For example, when the fastening sequence of the screws is predetermined, the processing device 2 determines whether or not the screw-tightening at the estimated location is being performed according to the determined sequence. When the torque value necessary for fastening is predetermined, the processing device 2 determines whether or not the torque value necessary for the screw-tightening at the estimated location is detected. When the task is inappropriate, the processing device 2 outputs an alert (step S8).

When the task is appropriate, the processing device 2 determines whether or not the screw-tightening at the estimated location is completed (step S9). For example, the processing device 2 refers to the torque value necessary for the screw-tightening at the estimated location from the fastening location master data 5d. When the torque value received from the digital tool is greater than the necessary torque value, the processing device 2 determines that the screw-tightening at the estimated location is completed. When it is determined that the screw-tightening is incomplete, step S4 is re-performed.

When the screw-tightening is determined to be completed, the processing device 2 records that the screw-tightening at the estimated location is completed in history data 5e (step S10). For example, the torque value that is detected by the tool is associated with the ID of the task and the ID of the estimated location. As illustrated, the processing device 2 also may associate the model and ID of the tool used, the screw-tightening count, and the recognition result of the mark with the ID of the fastening location. The mark is recognized by the processing device 150 based on the image that is imaged by the imaging device 1. The processing device 150 extracts an aggregate of pixels of the mark color from the image and counts the number of pixels in the aggregate. When the number of pixels is greater than a preset threshold, a mark is determined to be present.

Advantages of the embodiment will now be described.

There are cases where screw-tightening is performed when making an article. Conventionally, to prevent forgetting to tighten screws, to comply with the fastening sequence of the screws, etc., in a manufacturing site, the generation of checklists and/or mutual confirmation by multiple workers has been performed. However, checklists that are generated by workers may include missing entries, entry mistakes, etc. Confirmation by multiple workers requires time and effort and increases the cost. Also, the time necessary to make the article is increased. When a mistake is found in the confirmation of the article after the task, rework of the task is necessary.

For these problems, according to the embodiment of the invention, the imaging device 1 consecutively and repeatedly images the hand of the worker. The processing device 2 measures the coordinates of the hand based on the images. When tightening the screw, the hand of the worker moves in an arc-like shape centered on a part of the tool. The inventions of the application focus on this point, and uses multiple coordinates that are measured to calculate the center coordinate of the rotation of the tool. The position of the screw being turned corresponds to the center coordinate. Therefore, the center coordinate can be utilized to confirm the tightening task of the screw.

For example, the center coordinate can be used to estimate which screw is being tightened at which location. Based on the estimation result, the record of the screw-tightening can be automatically generated. When the fastening sequence of the screws is determined, it can be automatically confirmed whether or not the location of the screw-tightening is in accordance with the determined sequence. When a digital tool is used, it can be automatically confirmed whether or not the screw is tightened with the necessary torque value.

According to the embodiment of the invention, the center coordinate can be calculated when performing the tightening task. Therefore, errors of the task can be detected in real time. When an erroneous task is performed, rework of the task can be reduced by promptly detecting the erroneous task. The work efficiency can be increased thereby.

An example is described above in which the embodiment is performed using the MR device 100. The embodiment can be performed using a device other than the MR device 100. For example, the imaging device 1 may image the worker from above at a position separated from the worker. The processing device 2 recognizes the hand of the worker based on the image and measures the coordinate of the hand. Thereafter, the coordinate of the hand is used to calculate the center coordinate of the rotation of the tool similarly to the example above. In such a case, a general-purpose personal computer can be used as the processing device 2. A mouse or a keyboard can be used as the input device 3. A monitor can be used as the display device 4.

When the MR device 100 is used, the image camera 131 and the depth camera 132 move together with the worker. Therefore, the hand of the worker is not easily concealed by another object during the task. The hand of the worker can be more reliably imaged. Therefore, a state does not easily occur in which the hand is not imaged and the center coordinate is not calculated. Because the hand is not easily concealed, the accuracy of the calculated center coordinate also can be improved.

According to the MR device 100, the data that is output from the processing device 150 is displayed on the lenses 111 and 112. Therefore, the worker can confirm the alert emitted from the processing device 150, etc., while performing the task. The efficiency of the task can be increased by using the MR device 100.

First modification

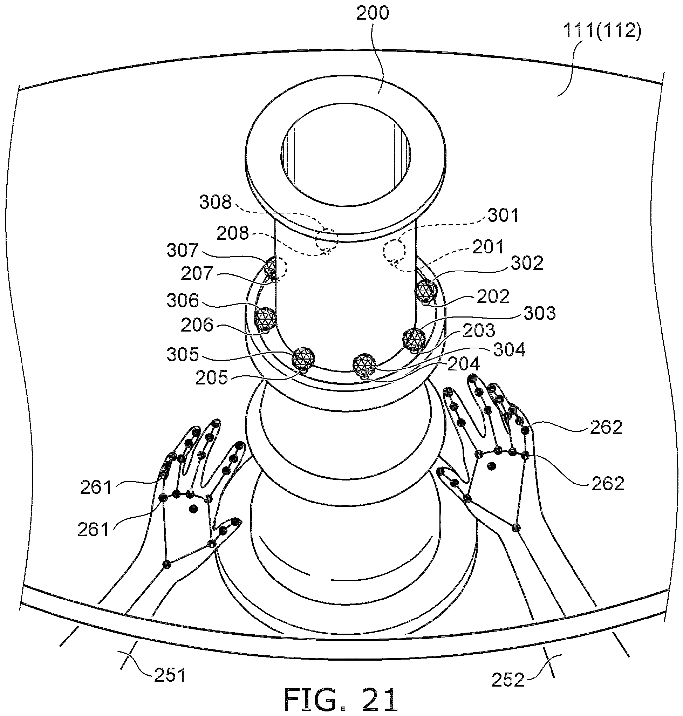

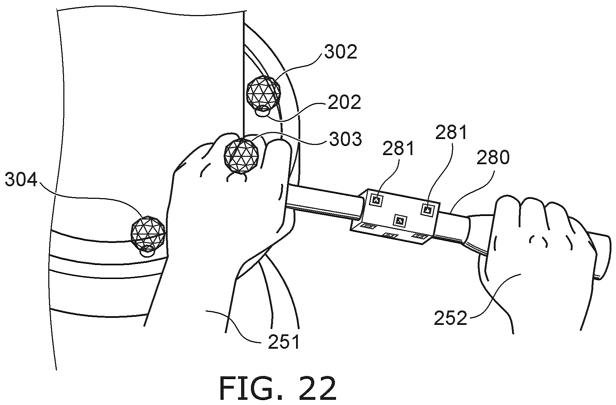

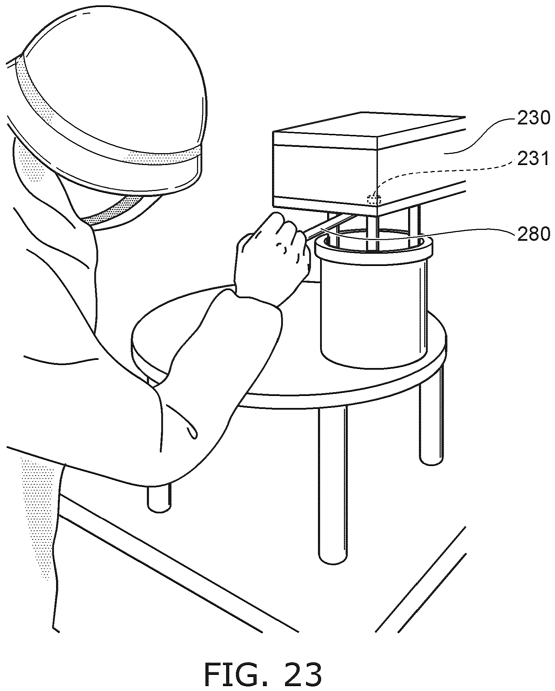

FIG. 21 is a schematic view showing an output example of a processing device according to a first modification of the embodiment. FIGS. 22 and 23 are schematic views illustrating tasks.

As shown in FIG. 21, the processing device 150 may display virtual objects 301 to 308 (first objects) in the tightening task. The objects 301 to 308 are displayed to correspond to the fastening locations 201 to 208. The objects 301 to 308 respectively indicate the positions of the fastening locations 201 to 208. For example, the distance between the object 301 and the corresponding fastening location 201 is less than the distances between the object 301 and the other fastening locations.

The processing device 150 detects contact between a prescribed object and the objects 301 to 308. For example, the processing device 150 detects contact between a hand and the objects 301 to 308. More specifically, the processing device 150 repeatedly calculates the distances between the hand and each of the objects 301 to 308. When the distance to one of the objects falls below a preset threshold, the processing device 150 determines that the hand contacts the object.

When the hand has contacted one of the objects, the processing device 150 estimates that the screw is being tightened at the location corresponding to the object. For example, as shown in FIG. 22, when the screw is fastened at the fastening location 203, the wrench 280 is rotated with one hand; and the head of the wrench 280 is gripped with the other hand. At this time, the hand contacts the object 303. The processing device 150 detects the contact.

In addition to the contact between the object and the hand, the processing device 150 also estimates the location at which the screw is being tightened based on the movement of the hand turning the tool. By using two methods to estimate the location of the screw-tightening, the estimation by one method may be successful even when the estimation by the other method fails. According to the first modification, the location of the screw-tightening can be estimated more reliably. By displaying the objects 301 to 308, the worker can easily ascertain the fastening location. The work efficiency can be increased thereby.

The positions at which the objects 301 to 308 are displayed are preregistered as coordinates in the three-dimensional coordinate system having the marker 210 shown in FIG. 3 as the origin. In the example shown in FIG. 22, the objects 301 to 308 is displayed proximate to the fastening locations 201 to 208. In other words, the positions of the objects 301 to 308 are proximate to the center coordinate when fastening the screw at the fastening locations 201 to 208. Accordingly, the center coordinate of the rotation may be calculated or corrected using the positions of the objects 301 to 308.

The necessary calculation amount of the detection of the contact between the object and the hand is less than that of the calculation of the center coordinate. Therefore, by detecting the contact with the object and the hand, the location at which the screw is being tightened can be estimated more quickly. For example, when the task is erroneous, rework of the task can be reduced by outputting an alarm more promptly.

On the other hand, as in an article 230 shown in FIG. 23, there are also cases where a fastening location 231 is in a narrow location. It is difficult for the worker to visually recognize the fastening location 231. Furthermore, in the example, the left hand cannot be inserted into the location of the fastening location; and the worker cannot grip the head of the wrench 280 with the left hand. In other words, the hand cannot contact the object. Also, even if the hand and the object are in contact, the image camera 131 and the depth camera 132 cannot image the contact. Therefore, the contact between the hand and the object cannot be detected. In such a case, the location at which the screw is being tightened can be estimated by calculating the center coordinate of the rotation of the tool based on the movement of the hand.

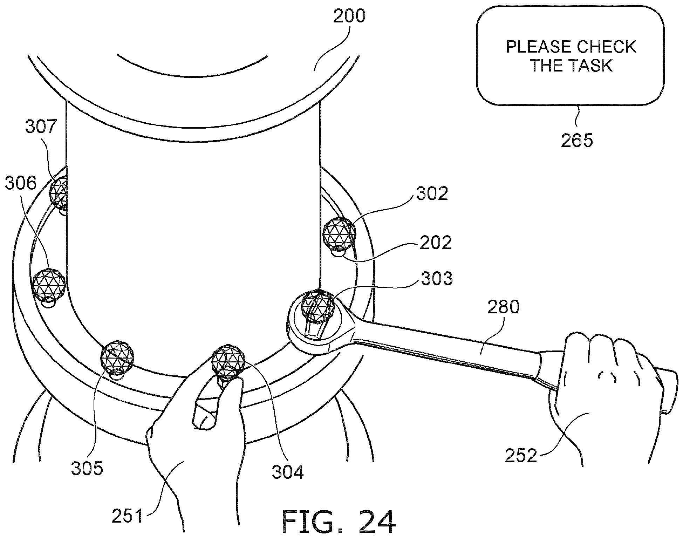

FIG. 24 is a schematic view showing an output example of the processing device according to the first modification of the embodiment.

The processing device 150 may output an alert when the fastening location (a first fastening location) estimated based on the contact between the object and the hand is different from the fastening location (a second fastening location) estimated based on the center coordinate of the rotation of the tool. For example, when the left hand 251 contacts the object 304 as shown in FIG. 24, the processing device 150 estimates that the screw is being tightened at the fastening location 204 corresponding to the object 304. On the other hand, the right hand 252 is tightening a screw at the fastening location 203 (not illustrated) with the wrench 280. The processing device 150 estimates that the screw is being tightened at the fastening location 203 based on the movement of the right hand 252. The fastening location 203 estimated based on the movement of the hand and the fastening location 204 estimated based on the contact between the hand and the object are different. Therefore, the processing device 150 outputs the alert.

When turning a screw, other than the case where the grip of the tool is gripped with two hands, it is desirable for both the grip and head of the tool to be gripped. By turning the screw while pressing the head of the tool, movement of the head of the tool in an unintended direction can be suppressed. For example, the likelihood of the tool moving in an unintended direction and damaging the article can be reduced.

According to the first modification of the embodiment, as shown in FIG. 24, an alert is output when the task is performed without gripping the head even though the head of the tool can be gripped. As a result, the worker can be prompted to perform the appropriate task.

In the example above, the contact between the hand and the object is detected. Instead of the hand, the contact between the tool and the object may be detected. Or, both the contact between the hand and the object and the contact between the tool and the object may be detected. Similarly to the example above, when the tool and the object contact each other, it can be estimated that the screw is being tightened at the fastening location corresponding to the object.

Various methods can be used to estimate the position of the tool. For example, the wrench 280 includes a sensor; and the position of the wrench 280 is estimated using the detected value of the sensor. The sensor is an inclination sensor, an acceleration sensor, a gyro sensor, etc. The position of the wrench 280 may be estimated by combining the detected value of the sensor and the detection result of the hand.

Or, the processing device 150 may estimate the position of the wrench 280 by image processing. For example, an image (a template image) of the tool to be used is prepared beforehand. The processing device 150 performs template matching to determine whether or not the tool of the template image is visible in the image obtained when performing the task. The processing device 150 uses the position in the template image at which the tool is determined to be visible as the position of the tool.

Or, a marker for estimating the position of the tool may be mounted to the tool. In the example shown in FIG. 22, multiple markers 281 are mounted to the wrench 280. The processing device 150 recognizes one or more markers 281 in the image. The processing device 150 calculates the position of a designated part (the head) of the tool based on the recognized markers 281 and the positional relationship of the markers 281.

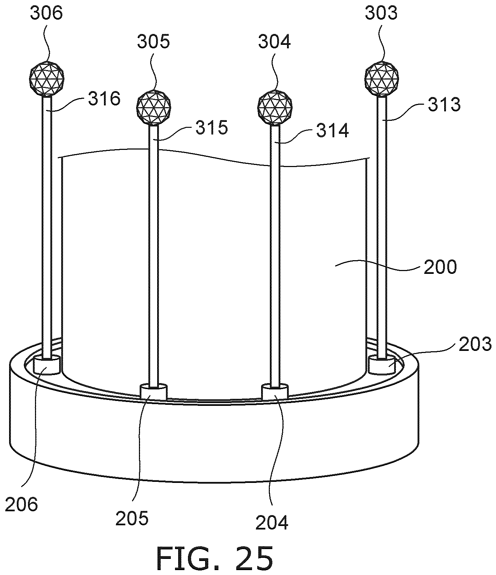

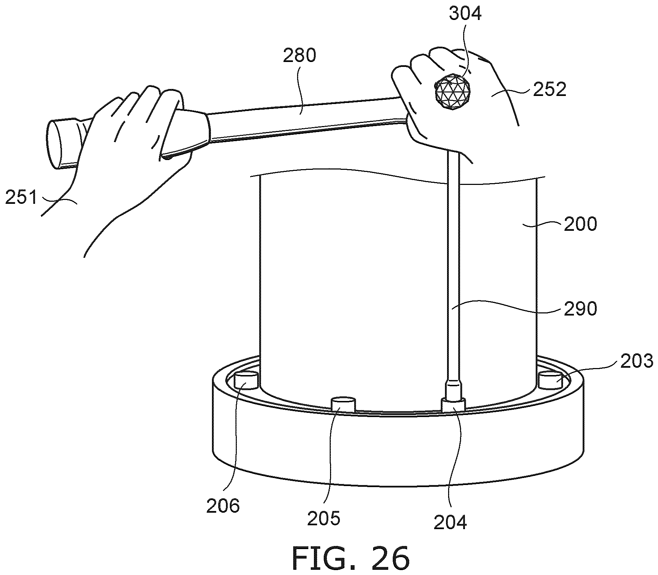

FIGS. 25 and 26 are schematic views showing output examples of the processing device according to the first modification of the embodiment.

In the example shown in FIG. 22, the objects 301 to 308 are displayed proximate to the fastening locations 201 to 208. When an extension bar is used, the hands are located at positions separated from the fastening location in the task. In such a case, an object may be displayed at a position separated from the fastening location. In the example shown in FIG. 25, the objects 303 to 306 that correspond respectively to the fastening locations 203 to 206 are displayed at positions separated from the fastening locations 203 to 206.

As shown in FIG. 25, the processing device 150 also may display virtual objects 313 to 316 (second objects). The objects 313 to 316 are displayed respectively between the fastening location 203 and the object 303, between the fastening location 204 and the object 304, between the fastening location 205 and the object 305, and between the fastening location 206 and the object 306.

The objects 303 to 306 indicate positions at which the hand should be located when tightening the screw respectively at the fastening locations 203 to 206. The objects 313 to 316 indicate the positions at which the extension bar should be located when tightening the screw respectively at the fastening locations 203 to 206. For example, when tightening the screw at the fastening location 204, the hand contacts the object 304 as shown in FIG. 26. The extension bar 290 overlaps an object 314. The processing device 150 detects the contact between the hand and the object 304. The processing device 150 estimates that the screw is being tightened at the fastening location 204 corresponding to the object 304.

Based on the display of the objects 303 to 306 and the objects 313 to 316, the worker can easily understand where to position the hand and the extension bar when tightening the screw. The work efficiency can be increased thereby.

In the illustrated example, the objects 303 to 306 are spherical; and the objects 313 to 316 are rod-shaped. The shapes of the objects are not limited to the example as long as the objects are easy to visually recognize.

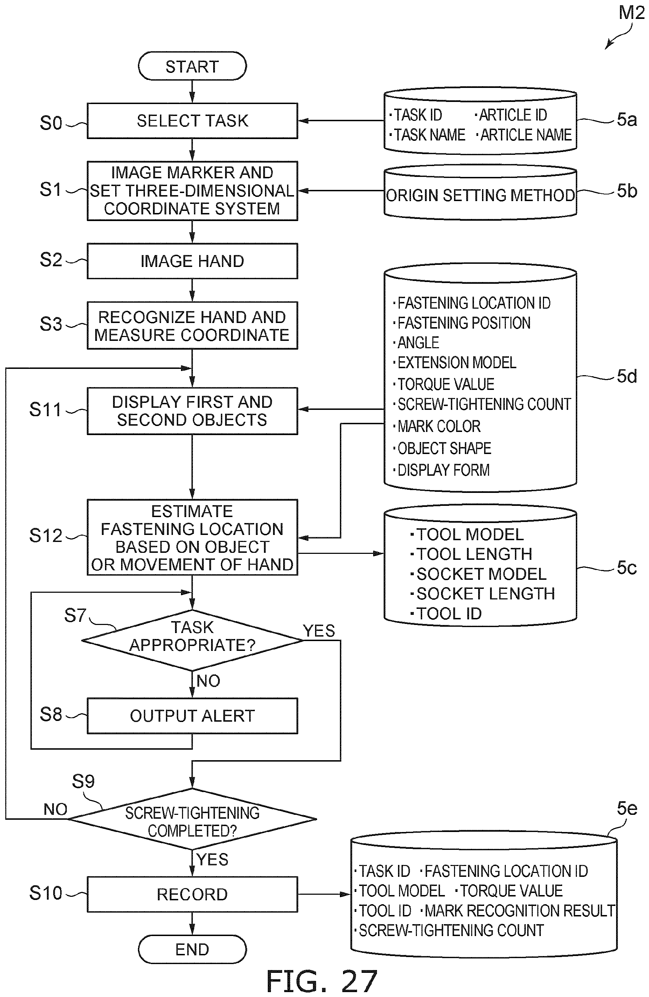

FIG. 27 is a flowchart showing a processing method according to the first modification of the embodiment.

Compared to the processing method M1 shown in FIG. 20, the processing method M2 shown in FIG. 27 further includes step S11. The processing method M2 includes step S12 instead of steps S4 to S6. The fastening location master data 5d also registers the extension model, the angle, the object shape, and the display form. The angle indicates the angle of the tool or the extension bar when tightening the screw for each fastening location. The extension model indicates the classification of the extension bar by structure, exterior shape, performance, etc. The object shape indicates the shape of the object displayed to correspond to each fastening location. The display form indicates the form of each displayed object. The display form is set for each screw-tightening count.

The processing device 2 causes the display of the first and second objects based on the set origin and the referenced data (step S11). The positions at which the first and second objects are displayed are calculated based on the origin, the fastening position, the angle, the extension model, the tool model, etc. For example, the length of the extension bar is designated by the extension model. The first object is displayed at a position separated from the fastening position by the length of the extension bar at the set angle. The second object is displayed in a region having the length of the extension bar at the set angle with respect to the fastening position.

The processing device 2 estimates the fastening location (step S12). Specifically, when contact between the first object and the hand is detected, the processing device 2 estimates that the screw is being tightened at the fastening location corresponding to the first object. Simultaneously, the processing device 2 performs steps S4 to S6 of the processing method M1, and estimates the fastening location based on the center coordinate.

When the fastening location at which the screw is being tightened is estimated, steps S7 to S10 are then performed similarly to the processing method M1. As described above in step S7, the task may be determined to be improper when the fastening location estimated based on the contact between the object and the hand is different from the fastening location estimated based on the center coordinate of the rotation of the tool.

Second modification

In the example above, the center coordinate of the rotation of the tool is calculated based on the coordinates of multiple hands. Instead of this method, the center coordinate of the rotation of the tool may be preregistered. For example, the position at which the tip of the tool is located when tightening a screw at a fastening location is registered as the center coordinate. Or, the position at which the screw is placed when tightening the screw at the fastening location may be registered as the center coordinate. The position of the threaded hole (the fastening location) may be registered as the center coordinate. The corresponding fastening location is associated with the center coordinate. The processing device 2 estimates the location at which the screw is being tightened by using the center coordinate.

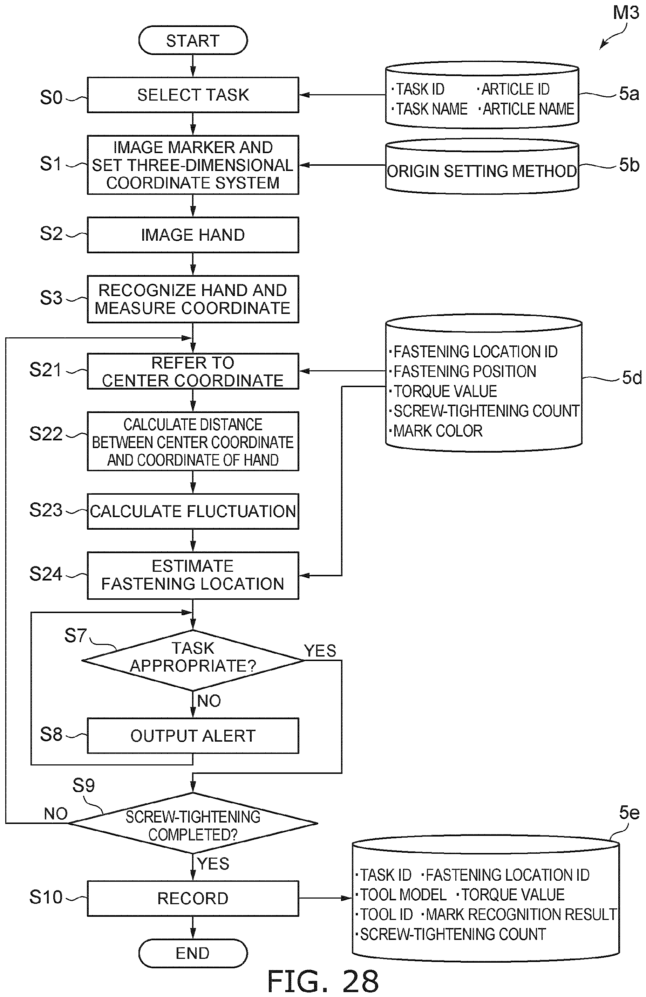

FIG. 28 is a flowchart showing a processing method according to the second modification of the embodiment.

In the processing method M3 according to the second modification, the processing device 2 performs steps S0 to S3 similarly to the processing method M1 shown in FIG. 20. The processing device 2 refers to the preregistered center coordinate (step S21). For example, the center coordinate is associated with the fastening location ID and stored in the fastening location master data 5d. The center coordinate is registered for each fastening location. The processing device 2 calculates the distance between the center coordinate and the multiple coordinates of the hand for each center coordinate (step S22). The processing device 2 calculates the fluctuation of the distance between the center coordinate and the multiple coordinates for each center coordinate (step S23). When the fluctuation is less than a preset threshold for one of the center coordinates, the processing device 2 estimates that the screw is being tightened at the fastening location associated with that center coordinate (step S24). When the fastening location at which the screw is being tightened is estimated, steps S7 to S10 are performed similarly to the processing method M1.

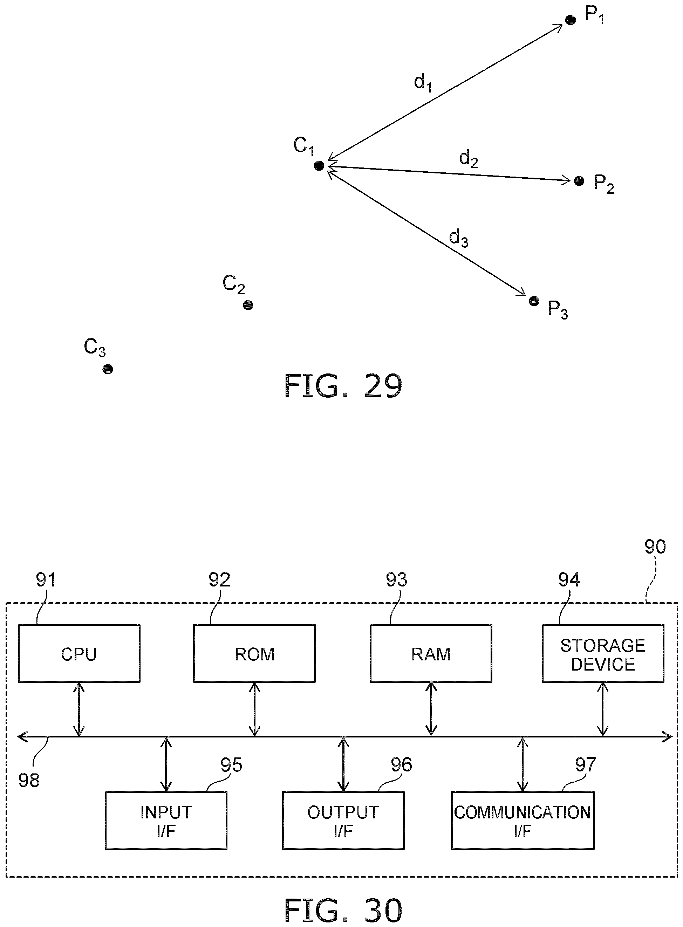

FIG. 29 is a schematic view for describing a processing method according to the second modification of the embodiment.

For example, as shown in FIG. 29, three center coordinates $C_1$ to $C_3$ that correspond to three fastening locations are preregistered. The three coordinates $P_1$ to $P_3$ are calculated based on images of the hand turning the screw. The processing device 2 calculates distances $d_1$ to $d_3$ respectively between the center coordinate $C_1$ and the coordinates $P_1$ to $P_3$. Similarly, the processing device 2 calculates the distances respectively between a center coordinate $C_2$ and the coordinates $P_1$ to $P_3$ and the distances respectively between the center coordinate $C_3$ and the coordinates $P_1$ to $P_3$. The processing device 2 calculates the fluctuation of the distances between the center coordinate $C_1$ and the coordinates $P_1$ to $P_3$, the fluctuation of the distances between the center coordinate $C_2$ and the coordinates $P_1$ to $P_3$, and the fluctuation of the distances between the center coordinate $C_3$ and the coordinates $P_1$ to $P_3$. When one of the fluctuations is less than a threshold, the processing device 2 estimates that the screw is being tightened at the fastening location associated with that center coordinate.

Examples of the fluctuation include an average value of multiple distances, a sum of differences between the distances, the variance of the multiple distances, the standard deviation of the multiple distances, etc. In the example shown in FIG. 29, the coordinates of the hand are substantially equidistant from the center coordinate $C_1$. It is therefore estimated that the screw is being tightened at the fastening location associated with the center coordinate $C_1$.

According to the processing method according to the second modification, the fastening location at which the screw is being tightened can be estimated with a lower calculation amount than when the center coordinate is calculated.

Some of the coordinates may be extracted from the multiple coordinates of the hand repeatedly measured by hand tracking. For example, when a digital tool is used, the digital tool transmits data to the processing device 2. The processing device 2 extracts the coordinate of the hand measured at the timing of receiving the data. The likelihood of the screw actually being turned is high at the timing of receiving the data from the digital tool. The accuracy of the estimation can be further increased by using the coordinate of the hand measured at the timing in the estimation.

The second modification of the embodiment can be combined with the first modification of the embodiment. For example, the processing device 150 estimates the location at which the screw is being tightened not only based on the contact between the object and the hand but also based on the distance between the center coordinate and the coordinate of the hand. The location of the screw-tightening is estimated using two methods. In such a case, the position at which the virtual object is displayed may be used as the center coordinate.

In the example above, the invention is applied to a task of tightening a screw. Embodiments of the invention are not limited to such examples. For example, the invention also is applicable to a task of loosening a screw. Even when loosening a screw, a tool is rotated by a hand centered on a part of the tool. Therefore, the center coordinate of the rotation of the tool can be calculated based on the movement of the hand. For example, the fastening location at which the screw is being loosened can be estimated using the center coordinate. When the sequence of the task for multiple locations is determined, it can be automatically determined whether or not the location at which the screw is being loosened is appropriate.

FIG. 30 is a schematic view showing a hardware configuration.

For example, a computer 90 shown in FIG. 30 is used as the processing system 10. The computer 90 includes a CPU 91, ROM 92, RAM 93, a storage device 94, an input interface 95, an output interface 96, and a communication interface 97.

The ROM 92 stores programs controlling operations of the computer 90. The ROM 92 stores programs necessary for causing the computer 90 to realize the processing described above. The RAM 93 functions as a memory region into which the programs stored in the ROM 92 are loaded.

The CPU 91 includes a processing circuit. The CPU 91 uses the RAM 93 as work memory and executes the programs stored in at least one of the ROM 92 or the storage device 94. When executing the programs, the CPU 91 executes various processing by controlling configurations via a system bus 98.

The storage device 94 stores data necessary for executing the programs and/or data obtained by executing the programs. The storage device 94 includes a solid state drive (SSD), etc. The storage device 94 may be used as the storage device 5 or the storage device 170.

The input interface (I/F) 95 can connect the computer 90 with the input device 3. The CPU 91 can read various data from the input device 3 via the input I/F 95.

The output interface (I/F) 96 can connect the computer 90 and an output device. The CPU 91 can transmit data to the display device 4 via the output I/F 96 and can cause the display device 4 to display information.

The communication interface (I/F) 97 can connect the computer 90 and a device outside the computer 90. For example, the communication I/F 97 connects a digital tool and the computer 90 by Bluetooth (registered trademark) communication.

The data processing performed by the processing device 2 or the processing device 150 may be performed by only one computer 90. A part of the data processing may be performed by a server or the like via the communication I/F 97.

Processing of various types of data described above may be recorded, as a program that can be executed by a computer, on a magnetic disk (examples of which include a flexible disk and a hard disk), an optical disk (examples of which include a CD-ROM, a CD-R, a CD-RW, a DVD-ROM, a DVD±R, and DVD±RW), a semiconductor memory, or another non-transitory computer-readable storage medium.

For example, information recorded on a recording medium can be read by a computer (or an embedded system). The recording medium can have any record format (storage format). For example, the computer reads a program from the recording medium and causes the CPU to execute instructions described in the program, on the basis of the program. The computer may obtain (or read) the program through a network.

Embodiments of the invention include the following features.

Feature 1

A processing device, configured to:

measure a plurality of coordinates of a hand respectively in a plurality of images, the hand being consecutively visible in the plurality of images, the hand turning a screw by using a first tool; and
calculate a center coordinate of a rotation of the first tool by using the plurality of coordinates.

Feature 2

The processing device according to feature 1, further configured to:

estimate a position of the screw based on the center coordinate;
refer to a position of a fastening location at which the screw is to be turned, the position of the fastening location being preregistered; and
estimate that the screw is being turned at the fastening location when a distance between the position of the fastening location and the estimated position of the screw is not more than a threshold.

Feature 3

The processing device according to feature 2, further configured to:
output an alert when the distance is greater than the threshold.

Feature 4

The processing device according to feature 2 or 3, further configured to:

output a notification when the distance is not more than the threshold,
the notification indicating that a task at the fastening location is appropriate.

Feature 5

The processing device according to feature 4, further configured to:
accept a selection of a mode of outputting the notification and a mode of not outputting the notification.

Feature 6

The processing device according to any one of features 2 to 5, further configured to:

receive a detected value detected by the first tool; and
associate the detected value with data related to the fastening location.

Feature 7

The processing device according to any one of features 2 to 5, further configured to:

receive a detected value detected by the first tool;
select one or more of the coordinates among the plurality of coordinates obtained at a timing of receiving the detected value; and
calculate the center coordinate by using the one or more coordinates.

Feature 8

The processing device according to any one of features 1 to 7, further configured to:

extract four coordinates from the plurality of coordinates; and
calculate a coordinate of a center of a sphere passing through the four coordinates as the center coordinate.

Feature 9

The processing device according to any one of features 1 to 7, further configured to:

extract a plurality of combinations from the plurality of coordinates, each of the plurality of combinations including two coordinates;
generate a perpendicular bisector between the two coordinates for each of the combinations; and
calculate a coordinate of an intersection of the plurality of perpendicular bisectors as the center coordinate.

Feature 10

The processing device according to any one of features 1 to 7, further configured to:

extract three coordinates from the plurality of coordinates; and
calculate a coordinate of a circumcenter of the three coordinates as the center coordinate.

Feature 11

The processing device according to any one of features 1 to 9, further configured to:

acquire a length of a tool interposed between the first tool and the screw;
calculate a normal vector by using

the center coordinate,
two coordinates extracted from the plurality of coordinates,
time-series information of the two coordinates, and
tighten/loosen information indicating whether the screw is being tightened or loosened by the first tool; and

estimate that the screw is present at a position separated from the center coordinate by the length of the tool along the normal vector.

Feature 12

The processing device according to any one of features 1 to 11, further configured to:

when two of the hands rotate the first tool, measure the coordinates respectively of the two of the hands based on the plurality of images;
calculate a first center coordinate of the rotation of the first tool by using a plurality of the coordinates of one hand among the two of the hands;
calculate a second center coordinate of the rotation of the first tool by using a plurality of the coordinates of another hand of the two of the hands; and
calculate the center coordinate by using the first center coordinate and the second center coordinate.

Feature 13

The processing device according to feature 12, in which
the center coordinate is calculated by weighting the second center coordinate more than the first center coordinate when a distance between the other hand and a center of the rotation of the first tool is greater than a distance between the one hand and the center of the rotation of the first tool.

Feature 14

A processing device, configured to:

display a first object corresponding to a fastening location at which a screw is to be turned, the first object being virtual;
calculate a center coordinate of a rotation of a first tool based on a plurality of images, a hand holding the first tool being consecutively visible in the plurality of images;
calculate a distance between the center coordinate and a coordinate of a fastening location at which the screw is being turned; and
estimate that the screw is being turned at the fastening location when a prescribed object is in contact with the first object or when the distance is less than a threshold, the threshold being preset.

Feature 15

The processing device according to feature 14, further configured to:

output an alert when a first fastening location is different from a second fastening location,

the screw being estimated to be turned at the first fastening location based on the contact of the prescribed object with the first object,
the screw being estimated to be turned at the second fastening location based on the distance.

Feature 16

A processing device, configured to:

measure a plurality of coordinates of a hand respectively in a plurality of images, the hand being consecutively visible in the plurality of images, the hand turning a screw by using a first tool;
calculate distances between the plurality of coordinates and a center coordinate of a rotation of the first tool, the center coordinate being preregistered; and
estimate that the screw is being turned at a fastening location associated with the center coordinate when fluctuation of the plurality of distances is less than a threshold, the threshold being preset.

Feature 17

A mixed reality device, including:

the processing device according to any one of features 1 to 16;
an imaging device configured to acquire the plurality of images; and
a display device configured to display information output from the processing device.

Feature 18

A processing method, including:
causing a processing device to

measure a plurality of coordinates of a hand respectively in a plurality of images, the hand being consecutively visible in the plurality of images, the hand turning a screw by using a first tool, and
calculate a center coordinate of a rotation of the first tool by using the plurality of coordinates.

Feature 19

A program, when executed by the processing device according to feature 18, causing the processing device to perform the processing method according to feature 18.

Feature 20

A storage medium configured to store the program according to feature 19.
According to the embodiments above, a processing device, a mixed reality device, a processing method, a program, and a storage medium are provided in which a task of turning a screw can be supported.
While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

**Claims**

1.  A processing device (2), configured to:

measure a plurality of coordinates of a hand (251, 252) respectively in a plurality of images, the hand being consecutively visible in the plurality of images, the hand turning a screw (215) by using a first tool (280); and
calculate a center coordinate of a rotation of the first tool by using the plurality of coordinates.

2. The processing device (2) according to claim 1, further configured to:

   estimate a position of the screw (215) based on the center coordinate;
   refer to a position of a fastening location (203) at which the screw is to be turned, the position of the fastening location being preregistered; and
   estimate that the screw is being turned at the fastening location when a distance between the position of the fastening location and the estimated position of the screw is not more than a threshold.

3. The processing device (2) according to claim 2, further configured to:
   output an alert (265) when the distance is greater than the threshold.

4. The processing device (2) according to claim 2 or 3, further configured to:

   output a notification when the distance is not more than the threshold,
   the notification indicating that a task at the fastening location (203) is appropriate.

5. The processing device (2) according to claim 4, further configured to:
   accept a selection of a mode of outputting the notification and a mode of not outputting the notification.

6. The processing device (2) according to any one of claims 2 to 5, further configured to:

   receive a detected value detected by the first tool (280); and
   associate the detected value with data related to the fastening location (203).

7. The processing device (2) according to any one of claims 2 to 5, further configured to:

   receive a detected value detected by the first tool (280);
   select one or more of the coordinates among the plurality of coordinates obtained at a timing of receiving the detected value; and
   calculate the center coordinate by using the one or more coordinates.

8. The processing device (2) according to any one of claims 1 to 7, further configured to:

   extract four coordinates from the plurality of coordinates; and
   calculate a coordinate of a center of a sphere passing through the four coordinates as the center coordinate.

9. The processing device (2) according to any one of claims 1 to 7, further configured to:

   extract a plurality of combinations from the plurality of coordinates, each of the plurality of combinations including two coordinates;
   generate a perpendicular bisector between the two coordinates for each of the combinations; and
   calculate a coordinate of an intersection of the plurality of perpendicular bisectors as the center coordinate.

10. The processing device (2) according to any one of claims 1 to 7, further configured to:

    extract three coordinates from the plurality of coordinates; and
    calculate a coordinate of a circumcenter of the three coordinates as the center coordinate.

11. The processing device (2) according to any one of claims 1 to 9, further configured to:

    acquire a length of a tool (280) interposed between the first tool and the screw (215);
    calculate a normal vector by using

       the center coordinate,
       two coordinates extracted from the plurality of coordinates,
       time-series information of the two coordinates, and
       tighten/loosen information indicating whether the screw is being tightened or loosened by the first tool; and

estimate that the screw is present at a position separated from the center coordinate by the length of the tool along the normal vector.

12. The processing device (2) according to any one of claims 1 to 11, further configured to:

when two of the hands (251, 252) rotate the first tool (280), measure the coordinates respectively of the two of the hands based on the plurality of images;
calculate a first center coordinate of the rotation of the first tool by using a plurality of the coordinates of one hand among the two of the hands;
calculate a second center coordinate of the rotation of the first tool by using a plurality of the coordinates of another hand of the two of the hands; and
calculate the center coordinate by using the first center coordinate and the second center coordinate.

13. The processing device (2) according to claim 12, wherein
the center coordinate is calculated by weighting the second center coordinate more than the first center coordinate when a distance between the other hand (252) and a center of the rotation of the first tool (280) is greater than a distance between the one hand (251) and the center of the rotation of the first tool.

14. A processing device (2), configured to:

display a first object (270) corresponding to a fastening location (203) at which a screw (215) is to be turned, the first object being virtual;
calculate a center coordinate of a rotation of a first tool (280) based on a plurality of images, a hand (251, 252) holding the first tool being consecutively visible in the plurality of images;
calculate a distance between the center coordinate and a coordinate of a fastening location at which the screw is being turned; and
estimate that the screw is being turned at the fastening location when a prescribed object is in contact with the first object or when the distance is less than a threshold, the threshold being preset.

15. The processing device (2) according to claim 14, further configured to:

output an alert (265) when a first fastening location (203) is different from a second fastening location,
the screw (215) being estimated to be turned at the first fastening location based on the contact of the prescribed object with the first object (270),
the screw being estimated to be turned at the second fastening location based on the distance.

16. A processing device (2), configured to:

measure a plurality of coordinates of a hand (251, 252) respectively in a plurality of images, the hand being consecutively visible in the plurality of images, the hand turning a screw (215) by using a first tool (280);
calculate distances between the plurality of coordinates and a center coordinate of a rotation of the first tool, the center coordinate being preregistered; and
estimate that the screw is being turned at a fastening location (203) associated with the center coordinate when fluctuation of the plurality of distances is less than a threshold, the threshold being preset.

17. A mixed reality device (100), comprising:

the processing device (2) according to any one of claims 1 to 16;
an imaging device (131) configured to acquire the plurality of images; and
a display device (121, 122) configured to display information output from the processing device.

18. A processing method, comprising:
causing a processing device (2) to

measure a plurality of coordinates of a hand (251, 252) respectively in a plurality of images, the hand being consecutively visible in the plurality of images, the hand turning a screw (215) by using a first tool (280), and
calculate a center coordinate of a rotation of the first tool by using the plurality of coordinates.

**19.** A storage medium configured to store a program,
the program causing a processing device (2) to perform the processing method according to claim 18.

FIG. 1

FIG. 2

FIG. 3

FIG. 4

FIG. 5

FIG. 6

202

280

251

204

252

FIG. 7

FIG. 8

$P_1 = (x_1, y_1, z_1)$

$P_2 = (x_2, y_2, z_2)$

$P_0 = (x_0, y_0, z_0)$

r

$P_3 = (x_3, y_3, z_3)$

$P_4 = (x_4, y_4, z_4)$

# FIG. 9

$P_1 = (x_1, y_1, z_1)$

$P_{12}$ L

$P_2 = (x_2, y_2, z_2)$

$P_3 = (x_3, y_3, z_3)$

$P_0 = (x_0, y_0, z_0)$

$P_{34}$

$P_4 = (x_4, y_4, z_4)$

O

$P_5 = (x_5, y_5, z_5)$

$P_{56}$

$P_6 = (x_6, y_6, z_6)$

# FIG. 10

$P_1 = (x_1, y_1, z_1)$

$\alpha$

$L_3$

$P_2 = (x_2, y_2, z_2)$

$\beta$

O

$P_0 = (x_0, y_0, z_0)$

$L_2$

$L_1$

$\gamma$

$P_3 = (x_3, y_3, z_3)$

FIG. 11

PLEASE CHECK
THE TASK

265

202

280

252

251

204

FIG. 12

FIG. 13

| TASK ID | FASTENING LOCATION ID | POSITION | TORQUE VALUE | SEQUENCE | RECORD | DETECTED VALUE |
|---------|----------------------|----------|--------------|----------|--------|----------------|
| S001 | A001 | $x_a$, $y_a$, $z_a$ | 75N | 1 | ✓ | 78N |
| S001 | A002 | $x_b$, $y_b$, $z_b$ | 75N | 2 | | |
| S001 | A003 | $x_c$, $y_c$, $z_c$ | 75N | 3 | | |
| S001 | A004 | $x_d$, $y_d$, $z_d$ | 75N | 4 | | |
| S002 | B001 | $x_e$, $y_e$, $z_e$ | 60N | 1 | | |

FIG. 14

280

RD1

285  215

FIG. 15A

RD2

285  215

280

FIG. 15B

$$\overrightarrow{P_0P_1} \times \overrightarrow{P_0P_2}$$

FIG. 16

FIG. 17

220

221

222

223

225 224

251

280

252

# FIG. 18

FIG. 19

**FIG. 20**

M1

START

S0 — SELECT TASK ← ·TASK ID  ·ARTICLE ID / ·TASK NAME  ·ARTICLE NAME  5a

S1 — IMAGE MARKER AND SET THREE-DIMENSIONAL COORDINATE SYSTEM ← ORIGIN SETTING METHOD  5b

S2 — IMAGE HAND

S3 — RECOGNIZE HAND AND MEASURE COORDINATE

S4 — CALCULATE CENTER COORDINATE OF ROTATION ← ·TOOL MODEL / ·TOOL LENGTH / ·SOCKET MODEL / ·SOCKET LENGTH / ·TOOL ID  5c

S5 — ESTIMATE POSITION OF SCREW

S6 — ESTIMATE FASTENING LOCATION ← ·FASTENING LOCATION ID / ·FASTENING POSITION / ·TORQUE VALUE / ·SCREW-TIGHTENING COUNT / ·MARK COLOR  5d

S7 — TASK APPROPRIATE? — YES

NO

S8 — OUTPUT ALERT

S9 — SCREW-TIGHTENING COMPLETED? — NO

YES

S10 — RECORD → ·TASK ID  ·FASTENING LOCATION ID / ·TOOL MODEL  ·TORQUE VALUE / ·TOOL ID ·MARK RECOGNITION RESULT / ·SCREW-TIGHTENING COUNT  5e

END

FIG. 21

FIG. 22

FIG. 23

FIG. 24

FIG. 25

FIG. 26

M2

START

S0 — SELECT TASK

5a — ·TASK ID    ·ARTICLE ID
·TASK NAME    ·ARTICLE NAME

S1 — IMAGE MARKER AND SET THREE-DIMENSIONAL COORDINATE SYSTEM

5b — ORIGIN SETTING METHOD

S2 — IMAGE HAND

S3 — RECOGNIZE HAND AND MEASURE COORDINATE

S11 — DISPLAY FIRST AND SECOND OBJECTS

5d — ·FASTENING LOCATION ID
·FASTENING POSITION
·ANGLE
·EXTENSION MODEL
·TORQUE VALUE
·SCREW-TIGHTENING COUNT
·MARK COLOR
·OBJECT SHAPE
·DISPLAY FORM

S12 — ESTIMATE FASTENING LOCATION BASED ON OBJECT OR MOVEMENT OF HAND

5c — ·TOOL MODEL
·TOOL LENGTH
·SOCKET MODEL
·SOCKET LENGTH
·TOOL ID

S7 — TASK APPROPRIATE? — YES

NO

S8 — OUTPUT ALERT

S9 — SCREW-TIGHTENING COMPLETED? — NO

YES

5e — ·TASK ID   ·FASTENING LOCATION ID
·TOOL MODEL   ·TORQUE VALUE
·TOOL ID   ·MARK RECOGNITION RESULT
·SCREW-TIGHTENING COUNT

S10 — RECORD

END

FIG. 27

M3

```
                    ┌─────────┐
                    │  START  │
                    └────┬────┘
                         │
S0 ─┤   SELECT TASK   │◄──── ·TASK ID    ·ARTICLE ID    ─ 5a
                         │        ·TASK NAME  ·ARTICLE NAME
                         │
S1 ─┤ IMAGE MARKER AND
       SET THREE-DIMENSIONAL │◄──── ORIGIN SETTING METHOD ─ 5b
       COORDINATE SYSTEM │
                         │
S2 ─┤   IMAGE HAND    │
                         │
S3 ─┤ RECOGNIZE HAND AND
       MEASURE COORDINATE │
                         │
S21 ─┤ REFER TO
        CENTER COORDINATE │◄──── ·FASTENING LOCATION ID
                         │        ·FASTENING POSITION
S22 ─┤ CALCULATE DISTANCE          ·TORQUE VALUE      ─ 5d
        BETWEEN CENTER COORDINATE  ·SCREW-TIGHTENING COUNT
        AND COORDINATE OF HAND     ·MARK COLOR
                         │
S23 ─┤ CALCULATE FLUCTUATION │
                         │
S24 ─┤ ESTIMATE
        FASTENING LOCATION │◄────┘
                         │
S7 ─◄ TASK APPROPRIATE? ►─── YES
                         │ NO
S8 ─┤   OUTPUT ALERT  │
                         │
S9 ─◄ SCREW-TIGHTENING ►─── NO
       COMPLETED?
                         │ YES
S10 ─┤   RECORD  │────► ·TASK ID  ·FASTENING LOCATION ID  ─ 5e
                         │           ·TOOL MODEL  ·TORQUE VALUE
                    ┌────┴────┐      ·TOOL ID  ·MARK RECOGNITION RESULT
                    │   END   │      ·SCREW-TIGHTENING COUNT
                    └─────────┘
```

# FIG. 28

FIG. 29

FIG. 30

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 132736 A (MITSUBISHI ELECTRIC ENG) 8 July 2013 (2013-07-08) | 14,15,17 | INV. G06T7/20 |
| A | * See Written Opinion. * | 1-13,16, 18,19 | G06T7/70 |
| | ----- | | |
| A | US 2022/222391 A1 (DUMAS LOUIS [FR] ET AL) 14 July 2022 (2022-07-14) * the whole document * | 1-19 | |
| | ----- | | |
| A | CN 110 428 496 A (BEIJING INST SPACECRAFT ENVIRONMENT ENGINEERING) 8 November 2019 (2019-11-08) * the whole document * | 1-19 | |
| | ----- | | |
| A | JP 2013 003773 A (NARA INST SCIENCE & TECHNOLOGY; DAIHEN CORP) 7 January 2013 (2013-01-07) * the whole document * | 1-19 | |
| | ----- | | |
| A | WO 2023/105726 A1 (FANUC CORP [JP]) 15 June 2023 (2023-06-15) * the whole document * | 1-19 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 4 March 2025 | Nicolau, Stephane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................
& : member of the same patent family, corresponding
document

EPO FORM 1503 03.82 (P04C01)

3

## ANNEX TO THE EUROPEAN SEARCH REPORT
## ON EUROPEAN PATENT APPLICATION NO.

EP 24 19 9741

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | | Publication date |
|---|---|---|---|---|---|
| JP 2013132736 | A | 08-07-2013 | CN | 104023906 A | 03-09-2014 |
| | | | JP | 5930708 B2 | 08-06-2016 |
| | | | JP | 2013132736 A | 08-07-2013 |
| | | | WO | 2013099373 A1 | 04-07-2013 |
| US 2022222391 | A1 | 14-07-2022 | CN | 113840692 A | 24-12-2021 |
| | | | EP | 3969971 A1 | 23-03-2022 |
| | | | ES | 2990027 T3 | 28-11-2024 |
| | | | FR | 3096150 A1 | 20-11-2020 |
| | | | HU | E068656 T2 | 28-01-2025 |
| | | | IL | 288007 A | 01-01-2022 |
| | | | PL | 3969971 T3 | 13-01-2025 |
| | | | US | 2022222391 A1 | 14-07-2022 |
| | | | WO | 2020229746 A1 | 19-11-2020 |
| CN 110428496 | A | 08-11-2019 | NONE | | |
| JP 2013003773 | A | 07-01-2013 | NONE | | |
| WO 2023105726 | A1 | 15-06-2023 | CN | 118355416 A | 16-07-2024 |
| | | | DE | 112021008311 T5 | 14-08-2024 |
| | | | JP | WO2023105726 A1 | 15-06-2023 |
| | | | WO | 2023105726 A1 | 15-06-2023 |

EPO FORM P0459

For more details about this annex : see Official Journal of the European Patent Office, No. 12/82